(19) **Europäisches Patentamt**

**European Patent Office**

**Office européen des brevets**

(11) **EP 0 735 747 B1**

(12) **EUROPEAN PATENT SPECIFICATION**

(45) Date of publication and mention
of the grant of the patent:
**03.11.1999 Bulletin 1999/44**

(51) Int Cl.⁶: **H04N 5/44**, H04N 5/21

(21) Application number: **96104579.6**

(22) Date of filing: **22.03.1996**

(54) **Method and apparatus for motion compensated frame rate upconversion**

Verfahren und Vorrichtung für bewegungskompensierte Erhöhung der Bildfrequenz

Méthode et appareil pour la conversion vers le haut de la fréquence trame compensée en mouvement

(84) Designated Contracting States:
**DE FR GB IT**

(30) Priority: **31.03.1995 EP 95400722**

(43) Date of publication of application:
**02.10.1996 Bulletin 1996/40**

(73) Proprietor: **THOMSON multimedia
92648 Boulogne Cédex (FR)**

(72) Inventors:
 • **Weisser, Martin
 77955 Ettenheim (DE)**
 • **Hackett, Andrew
 67530 Klingenthal (FR)**
 • **Heimburger, Catherine
 67000 Strasbourg (FR)**

(74) Representative:
**Hartnack, Wolfgang, Dipl.-Ing. et al
Deutsche Thomson-Brandt GmbH
Licensing & Intellectual Property,
Karl-Wiechert-Alee 74
30625 Hannover (DE)**

(56) References cited:
**EP-A- 0 196 756**         **EP-A- 0 577 165**

 • **PATENT ABSTRACTS OF JAPAN vol. 14, no. 263
(E-938), 7 June 1990 & JP-A-02 081596 (SONY
CORP.), 22 March 1990,**
 • **KOIVUNEN T: "A NOISE-INSENSITIVE MOTION
DETECTOR" 1 August 1992 , IEEE
TRANSACTIONS ON CONSUMER
ELECTRONICS, VOL. 38, NR. 3, PAGE(S) 168 -
174 XP002007200 * the whole document ***

## Description

The present invention relates to a method and to an apparatus for motion compensated upconversion.

Background

The existing TV standards have a field frequency of 50 or 59.94 or 60Hz. When such pictures are displayed line flicker can arise in case of special picture content or large area flicker can arise in case of bright pictures, in particular on large screens. Such artefacts can be reduced when a display upconversion is performed in the receiver whereby the field frequency is doubled. However, simple upconversion algorithms like AABB can introduce new motion artefacts. To avoid such artefacts a motion compensation is carried out in the receiver which usually requires three expensive field memories for speedup, motion estimation and motion compensation.

EP-A-0574068 describes a method which performs these functions with two field memories only, one for speedup and one common for motion estimation and motion compensation. However, an additional memory is required for storing a lot of motion vectors.

Invention

It is one object of the invention to disclose a method of motion compensated upconversion which requires two field memories and one low-capacity vector memory for storing motion vectors only, thereby achieving in addition noise reduction. This object is reached by the method disclosed in claim 1.

It is a further object of the invention to disclose an apparatus which utilises the inventive method. This object is reached by the apparatus disclosed in claim 29 and claim 30.

A first field memory is used for doubling the field frequency. A second field memory is used in connection with a motion estimator, a motion compensated interpolator, a predictor, recursive filter means and appropriate processing time delays to perform on the high field frequency signals motion compensated interpolation together with a noise reduction.

The invention can be used for e.g. 50/59.94/60/50Hz interlaced to 100/119.88/120/75Hz interlaced upconversion, 50/59.94/60/50Hz interlaced to 100/119.88/120/75Hz proscan upconversion and 50/59.94/60/50Hz proscan to 100/119.88/120/75Hz proscan upconversion.

One advantage of the invention is that even when spatial and recursive temporal noise reduction are added to the motion compensated upconversion (MCU), two field memories only are sufficient to perform these functions. This can be achieved with special circuitry under the condition that the motion compensated interpolator receives partly the same video input signal as the motion estimator and that, once a wrong motion vector is calculated, the temporal filter will not propagate this error. Tests have shown that the latter can be achieved due to the kind of control used in the temporal noise reduction and that the error will decay from field to field.

A further advantage of the invention is that motion vectors for large main blocks need to be stored only so that the vector memory can have a low capacity. This can be achieved by calculating from said main block motion vectors refined subblock motion vectors just before they are needed in the processing so that the subblock motion vectors need not to be stored.

Advantageously, the calculation of the motion vectors and/or the temporal filter can be controlled by a computed noise level.

In principle, the inventive method is suited for motion compensated upconversion of interlaced video signals, in which in a first step source fields are converted to form fields of doubled field frequency and in a second step motion estimation and motion compensated interpolation, using motion information from said motion estimation, is performed on said fields of doubled field frequency, whereby a spatial and/or a temporal noise reduction is included in said motion compensated interpolation.

Advantageous additional embodiments of the inventive method are resulting from the respective dependent claims.

In principle the inventive apparatus for motion compensated upconversion of interlaced video signals includes:

- first memory means being used for converting source fields into fields of doubled field frequency;
- succeeding second memory means the input and output of which is connected to a motion estimator which performs field-to-field motion estimation;
- third memory means the input and output of which is connected to a motion compensated interpolator which performs field-to-field motion compensation and which receives motion information from said motion estimator and which delivers the motion compensated upconverted output signals;
- spatial noise reduction means and/or succeeding temporal noise reduction means, whereby the input signal of said spatial noise reduction means or said temporal noise reduction means, respectively, is derived from the input signal of said second memory means and the final output signal of the noise reduction means is fed to the input of said third memory means,

or includes:

- first memory means being used for converting source fields into fields of doubled field frequency;
- succeeding second memory means the input signal of which is derived from the output signal of said first memory means and is fed to the first input of a motion compensated interpolator which performs field-to-field motion compensation and which receives motion information from a motion estimator and which delivers the motion compensated upconverted output signals, whereby the signal at the second input of said motion compensated interpolator is derived from the output signal of said second memory means;
- said motion estimator which receives the output signal of said second memory means at its second input and which performs field-to-field motion estimation, whereby the signal at the first input of this motion estimator is derived from the output signal of said first memory means;
- spatial noise reduction means and/or succeeding temporal noise reduction means, whereby the input signal of said spatial noise reduction means or said temporal noise reduction means, respectively, is derived from the output of said first memory means and the final output of the noise reduction means is fed to the input of said second memory means and to the first input of said motion compensated interpolator.

Advantageous additional embodiments of the inventive apparatus are resulting from the respective dependent claims.

Drawings

Preferred embodiments of the invention are described with reference to the accompanying drawings, which show in:

Fig. 1    motion compensated upconverter with three field memories and noise reduction;
Fig. 2    basic block diagram for a motion compensated upconverter with two field memories;
Fig. 3    one embodiment of a motion compensated upconverter with two field memories;
Fig. 4    a second embodiment of a motion compensated upconverter with two field memories;
Fig. 5    a third embodiment of a motion compensated upconverter with two field memories;
Fig. 6    a fourth embodiment of a motion compensated upconverter with two field memories;
Fig. 7    main stage time diagram for upconversion;
Fig. 8    proscan grid produced in the motion compensated interpolator and estimator;
Fig. 9    horizontal prefilter and subsampling;
Fig. 10   main block and subblock;
Fig. 11   principle of two-sided block matching;
Fig. 12   small positional error for some motion vectors resulting from the subgrid used in the two-sided block matching;
Fig. 13   noise measurement zones;
Fig. 14   possible vectors in a periodic structure;
Fig. 15   current vector block and adjacent vector blocks in more detail;
Fig. 16   vertical motion vector component and vertical transition;
Fig. 17   subblocks areas and related mainblocks, the motion vectors of which are used to generate the subblock motion vector;
Fig. 18   three-dimensional grid with subblock errors;
Fig. 19   simplified block diagram for noise reduction;
Fig. 20   filtering directions in spatial noise filter;
Fig. 21   function of predictor for linear vertical average;
Fig. 22   temporal luminance or chrominance filter;
Fig. 23   additional switch used together with cross-colour reduction;
Fig. 24   first look-up table for scale factor;
Fig. 25   second look-up table for non-linearity;
Fig. 26   first output field for motion compensated interpolation;
Fig. 27   third output field for motion compensated interpolation;
Fig. 28   second output field for motion compensated interpolation in a first mode;

Fig. 29    fourth output field for motion compensated interpolation in the first mode;
Fig. 30    second output field for motion compensated interpolation in a second mode;
Fig. 31    fourth output field for motion compensated interpolation in the second mode;
Fig. 32    soft switch and odd/even select;
Fig. 33    global timing diagram;
Fig. 34    coring function;
Fig. 35    vertical and horizontal peaking and sin(x)/x correction;
Fig. 36    characteristic of a further embodiment of the non-linearity of Fig. 22;
Fig. 37    second look-up table for non-linearity for the further embodiment;
Fig. 38    further embodiment of the non-linearity of Fig. 22;
Fig. 39    first look-up table for scale factor for the further embodiment;
Fig. 40    graph of coding function for noise level.

### Preferred embodiments

The motion compensated upconversion process can be split into three main stages, namely:

- Motion estimation, horizontally and vertically, luminance only;
- Noise reduction, spatially and temporally, luminance;
- Noise reduction, temporally only, chrominance;
- Motion compensated interpolation, luminance and chrominance.

The motion estimator calculates the motion vectors denoted as MVs, the confidence denoted CL belonging to these MVs and one noise level per field denoted N. These results are then used to produce the noise reduced and motion compensated output pixels.

In the following it is considered that in the 50/60Hz domain:

- odd source fields = source fields 1, 5, ...,
- even source fields = source fields 3, 7, ...,

and that in the 100/120Hz domain:

- output field 1 ← from source field 1,
- output field 2 ← combination of source field 1 and source field 3,
- output field 3 ← combination of source field 3 and source field 5,
- output field 4 ← combination of source field 3 and source field 5.

The input and output samples are represented by 8 bit words, 0=LSB to 7=MSB.
Video input format (4:1:1):

- Y = 16 (black)... 240 (white), blank value = 16
- U, V = -112...0...+112, blank value = 0 (2's complement)

Video output format (before DAC):

- Y = 0 (ultra black)...255 (ultra white), blank value = 16
- U, V = 0...128...255, blank value = 128.

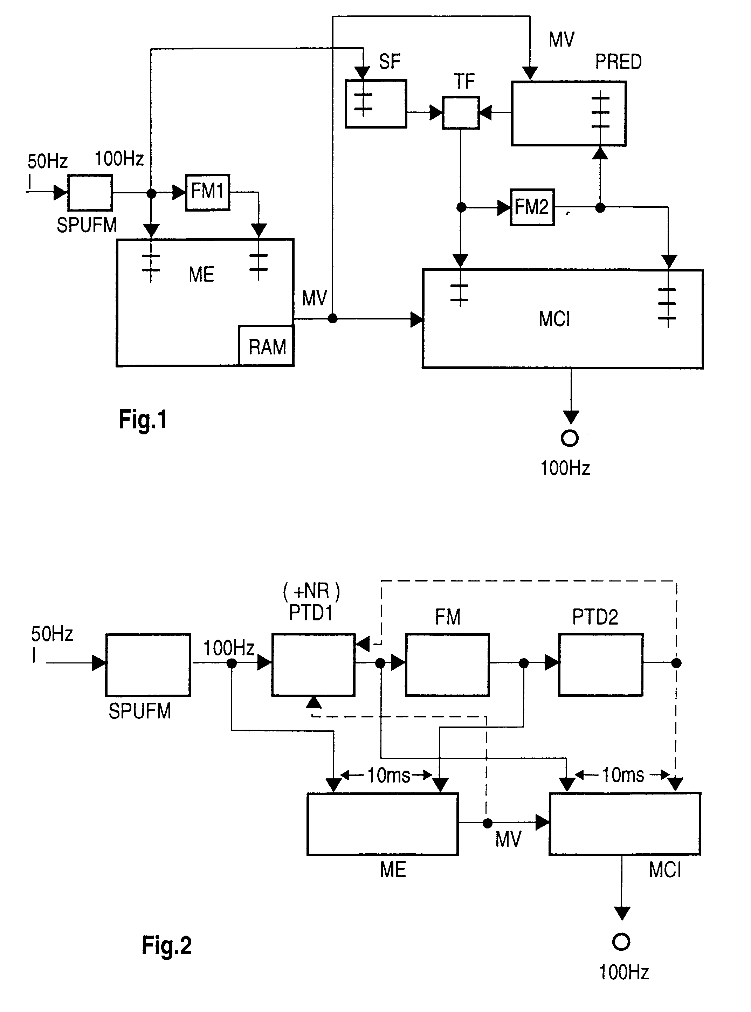

In Fig. 1 a field memory or a FIFO SPUFM is used to double the field frequency of input signal I. The output signal is fed to a motion estimator ME containing a low-capacity vector memory, to a second field memory or FIFO FM1 and to a spatial noise filter SF. A second input of ME is supplied by the output of FM1. The output of ME sends motion vectors MV and some other information to a motion compensated interpolator MCI and to a first input of a predictor PRED. The spatially noise filtered output of SF is fed via a temporal noise filter TF to a first input of MCI and to a third field memory or FIFO FM2. A second input of MCI is supplied by the output of FM2. The output of FM2 is also fed to a second input of predictor PRED. The output of PRED is supplied to a second input of temporal noise filter TF. The output signal O of motion compensated interpolator MCI is the final motion compensated, upconverted and noise reduced signal to be stored or displayed on a screen.
The processing times within the MCU circuit can easily be adapted using appropriate delays, e.g. PTD1 and PTD2 in further figures. The function of the various blocks will be explained later in connection with the other drawings.

In Fig. 1 and 3 to 6 the parallel bold dashes represent a line delay of full length (e.g. for 704 pixels) and the other parallel dashes depict a half line delay for storing subsampled picture data. The divided parallel bold dashes can be common line delays used in both, MCI and PRED.

These line delays are used to make available in the depicted diagram blocks such prior calculation results which are required when the pixels of the current line are output.

MCI makes also use of e.g. the output signal of switch SW3.

The basic block diagram of Fig. 2 shows again a field memory or a FIFO SPUFM, a second field memory or FIFO FM, a motion estimator ME and a motion compensated interpolator MCI. Due to a different arrangement two field memories or FIFOs are required only. Contrary to Fig. 1, the output of SPUFM is connected via a first processing time delay PTD1 to the first input of MCI and to FM. PTD1 represents the processing time needed in ME. The output of FM is connected to the second input of ME and via a second processing time delay PTD2 to the second input of MCI. Motion estimation chips like STi3220 of SGS-Thomson and two-dimensional interpolation filters like IMSA110 of SGS-Thomson and MPEG2 decoder chips containing a two-dimensional motion compensated interpolator like STi3500 of SGS-Thomson are already on the market.

The delay times of PTD1 and PTD2 are equal. The delay time of FM is one field minus the delay time of PTD1. This means that between the first and second input of ME and between the first and second input of MCI, respectively, a total delay time of one field (e.g. 10ms) is achieved.

The block denoted PTD1 contains also the inventive noise reduction which receives an input signal from the output of PTD2 and motion information from ME.

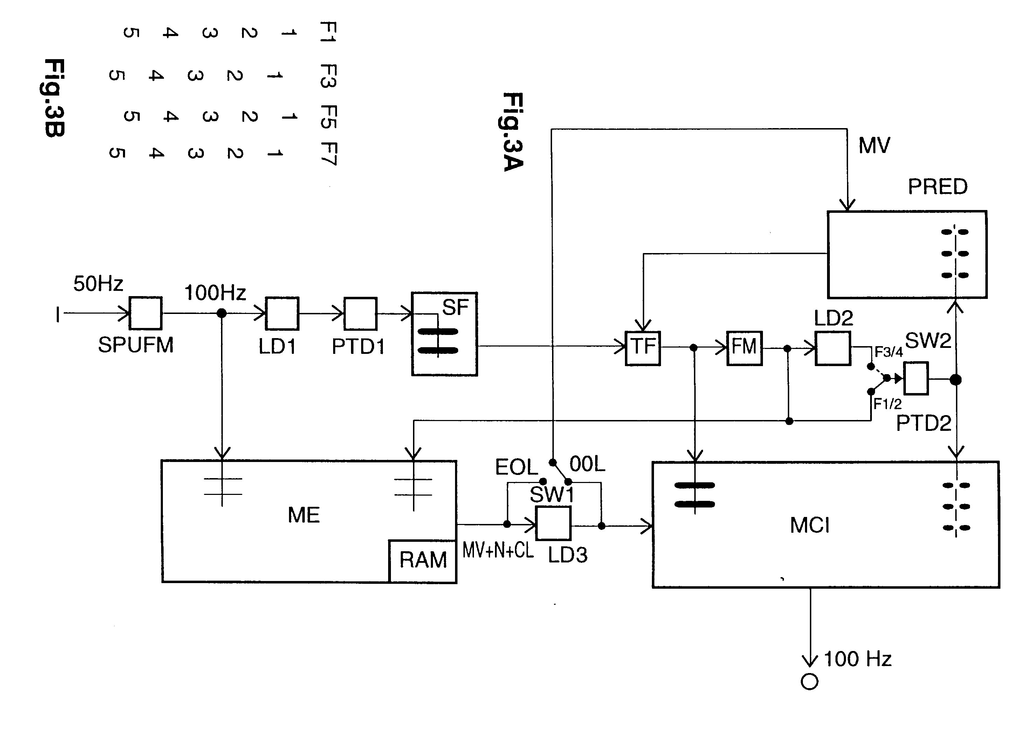

Fig. 3 to Fig. 6 show the basic circuitry of Fig. 2 in more detail in different embodiments.

In Fig. 3A, the block PTD1+NR of Fig. 2 includes in series a first line delay LD1, a processing time delay PTD1, a spatial noise filter SF and a temporal noise filter TF. The output of FM is passed through a second line delay LD2, the first input of a second switch SW2 and PTD2 to the second input of MCI and to the second input of a predictor PRED. The second input of switch SW2 is connected to the output of FM.

Motion vectors MV and e.g. information on the noise level N and on the confidence CL of the vectors is passed through a third line delay LD3 from ME to MCI. The input of LD3 is connected to the first input of a first switch SW1 and the output of LD3 is connected to the second input of a switch SW1. The output of SW1 supplies motion vectors MV to the first input of PRED. LD3 is written in for one line and read out for two succeeding lines. The reason is that the same SBMV vectors are applied for two lines.

The output of PRED is connected to the second input of temporal noise filter TF. In case of even output lines EOL the first input of SW1 is active whereas in case of odd output lines OOL the second input of SW1 is active. In case of fields 1 and 2 the first input of SW2 is active whereas in case of field 3 and 4 the second input of SW2 is active, i.e. connected to the output of SW2.

Motion estimator ME includes a vector memory RAM which stores main block motion vectors and main block zero vectors.

Fig. 3B shows such output fields (with line numbers) in signal O which are present in the input signal I. However, fields F3 and F7 are both first fields in the O output frames.

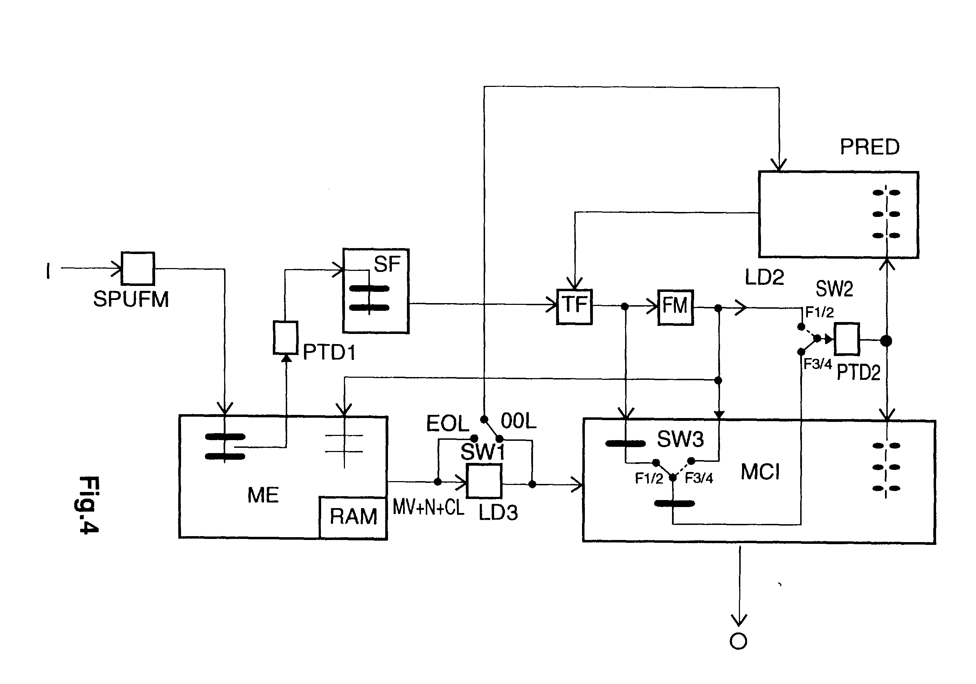

Basically, the embodiment of Fig. 4 differs from that of Fig. 3A in that the function of line delay LD1 is performed by a respective one-line delay which is part of motion estimator ME. ME has a corresponding second output which is connected to the input of PTD1. Further, the second line delay LD2 is omitted in Fig. 4. The second input of second switch SW2 is connected via a second output of motion compensated interpolator MCI and an internal one-line delay to the output of a third switch SW3 within MCI. The first input of SW3 is active for field 1 and 2 and is connected via an internal one-line delay to the first input of MCI. The second input of SW3 is active for field 3 and 4 and is connected via a third input of MCI to the output of field memory FM. Predictor PRED requires during the processing of output fields OF3 and OF4 a fourth line delay. The line delay at the output of switch SW3 can be regarded insofar as a pre-arranged line delay for the three subsequent line delays at the right side of MCI/PRED.

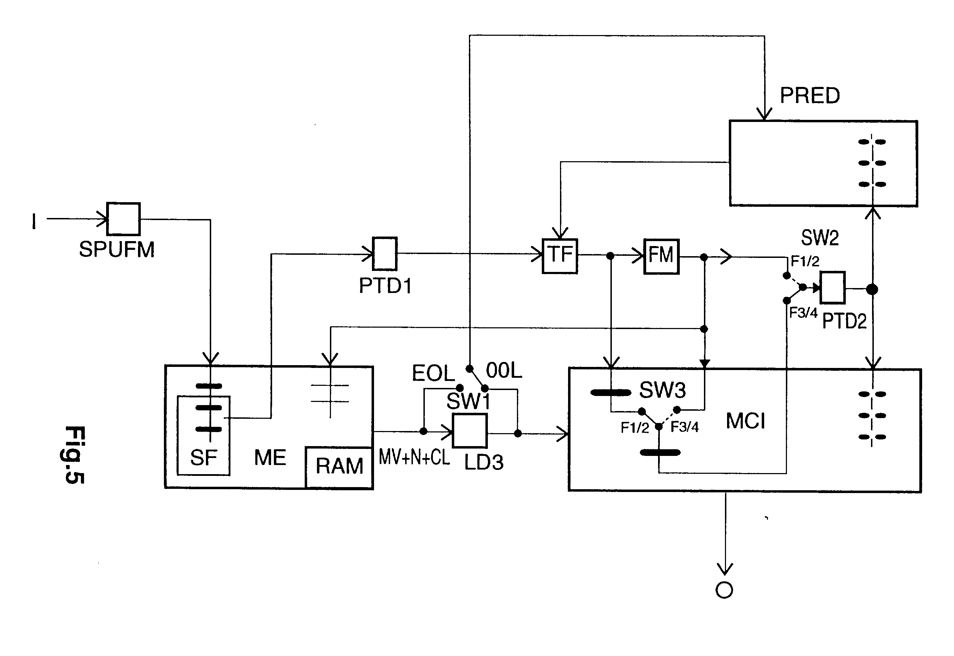

Basically, the embodiment of Fig. 5 differs from that of Fig. 4 in that spatial filter SF is omitted at its original location but that the function of SF is included into motion estimator ME.

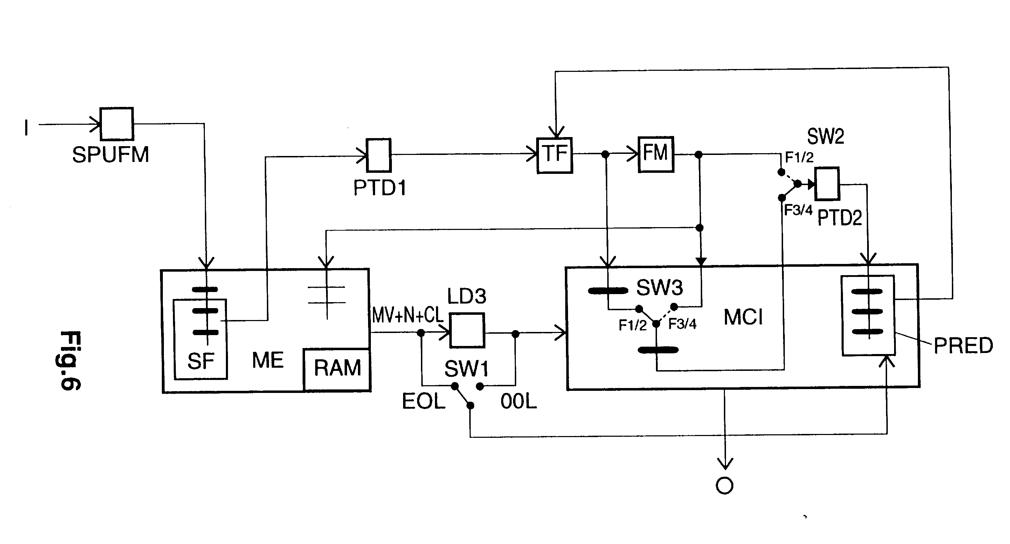

Basically, the embodiment of Fig. 6 differs from that of Fig. 5 in that predictor PRED is omitted at its original location but that the function of PRED is included into motion compensated interpolator MCI.

In Fig. 2 to 6, ME receives a non-noise reduced input signal and a noise reduced input signal on which previously calculated motion vectors have already been applied, whereas MCI receives two noise reduced input signals. FM has a delay of one field minus the delay of TF, e.g. two lines.

Luminance processing

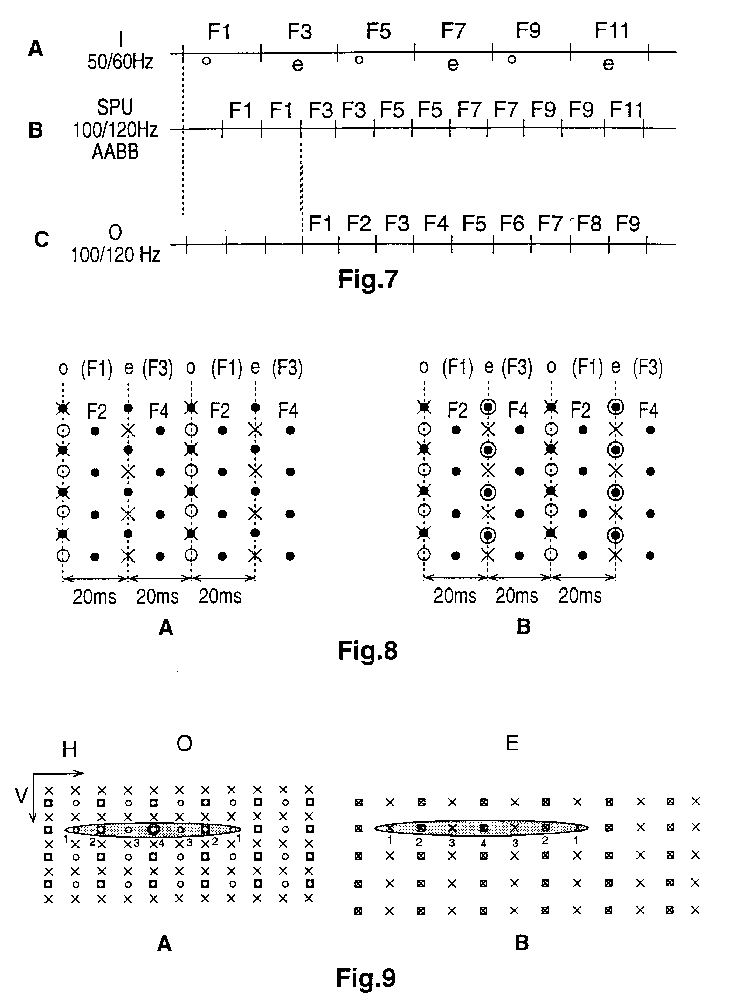

The source signal I, 50/60Hz/2:1/625, is sped up by means of a field memory to a 100/120Hz/2:1/625 AABB field repetition format. The time diagram of Fig. 7 shows the odd (o) / even (e) fields F1, F3, F5, ... of signal I, the sped-up (SPU) fields F1, F1, F3, F3, F5 ... and the fields F1, F2, F3, F4, F5, ... of output signal O.

An intermediate step in the processing is a proscan conversion the grid of which is depicted in Fig. 8. In the motion estimator ME (Fig. 8A) only the luminance odd source fields are vertically interpolated in order to place the lines of the odd and the even field onto a common vertical grid.

In the motion compensated interpolator a proscan grid (Fig. 8B) for both source fields and for luminance as well as for chrominance is produced by means of vertical filters.

In Fig. 8 the following symbols are used:

X   source grid;
○   lines introduced by means of vertical proscan interpolation;
•   spatial position of the output lines.

F1 is a odd (o) source field whereas F3 is an even (e) source field.

As depicted in Fig. 9A for the odd field F1 and in Fig. 9B for the even field F3, in the motion estimator both fields are now horizontally pre-filtered and subsampled. The grid so produced corresponds to the vertically V and horizontally H subsampled proscan grid shown in Fig. 8A. The horizontal pre-filter may have the coefficients (1/16, 2/16, 3/16, 4/16, 3/16, 2/16, 1/16) and is carried out on luminance only. Filtering can be done by first adding, followed by truncation.

In Fig. 9 the following symbols are used:

X            source grid;
X or ○       proscan grid. The ○ values can be calculated by vertically averaging of X values;
□            vertically and horizontally subsampled proscan grid (= 1st, 3rd, 5th, ... active pixels). This is the grid used for motion estimation, confidence and noise level calculation;
⊂⊃           subsampling filter. The center pixel denoted by a larger circle is the location for the output pixel.

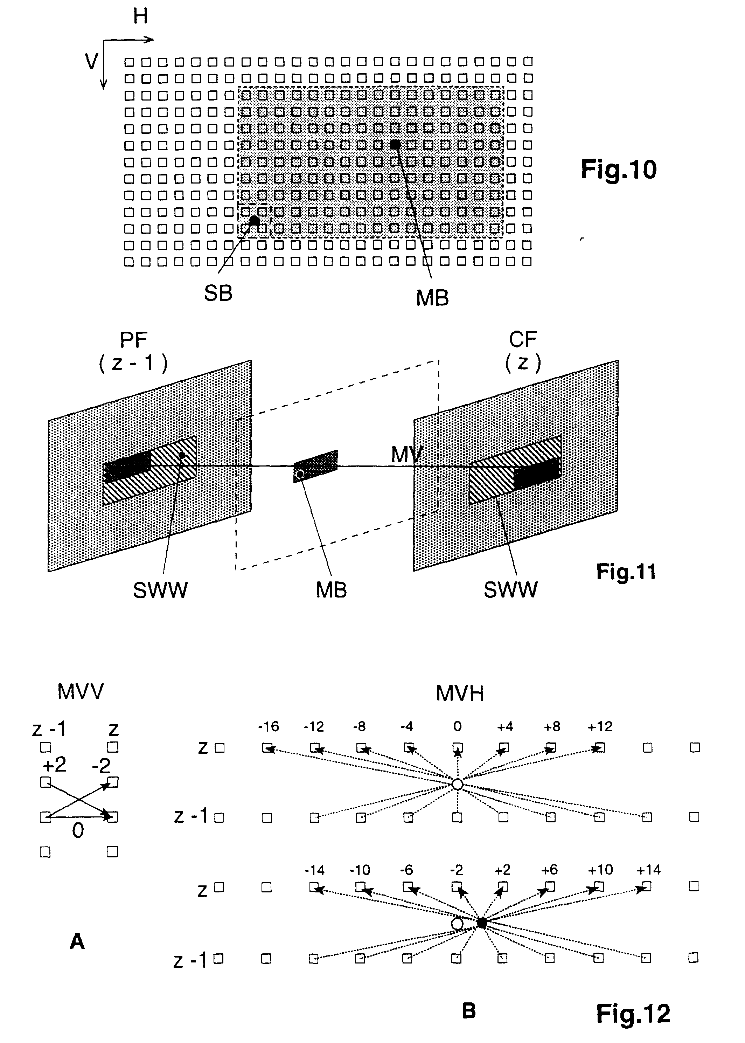

Fig. 10 depicts within the vertically and horizontally subsampled proscan grid a main block MB and a subblock SB. The latter may have a size of 2*2 pixels. A non-subsampled main block has the size of 32 pixels * 16 lines in a frame and the size of 32 pixels * 8 lines in a field. A main block has the size of 16 pixels * 8 lines in the horizontally and vertically subsampled proscan grid.

Advantageously, the motion estimator can perform a two sided block matching on large luminance main blocks denoted MB. A main block may have a size of 16 pixels * 8 lines. Two-sided block matching is described in more detail in PCT/EP94/02870 of the applicant.

In the motion estimator each possible MV is applied to each MB. For each motion vector an error E is calculated by accumulating the absolute differences (two's complement) of the corresponding pixels within the main block of the previous field and current field along the motion direction. Then the vector giving the best match, i.e. the smallest error, is chosen as the main block motion vector, denoted MBMV. If there are several equal smallest errors, i.e. several equally good motion vectors, the vector is chosen in the following order:

1st MVs with the horizontal component closest to zero;
2nd MVs with the horizontal component positive;
3rd MVs with the vertical component closest to zero;
4th MVs with the vertical component positive.

MV consists of the horizontal component MVH and the vertical component MVV. The horizontal component is positive when the motion on the screen is from left to right. The vertical component is positive when the motion on the screen is from top to bottom. Fig. 11 depicts the two sided block matching within the specified search windows SWW in the previous field PF (z-1) and in the current field CF (z) whereby for each subsequent main block MB in the field to be interpolated a motion vector MV is generated.

Due to the subgrid used a small positional error of one half subgrid pixel distance can arise for some motion vectors (-14,-10, -6, -2, +2, +6, +10, +14) as can be seen in Fig. 12B. This small error is acceptable.

Fig. 12A shows the vertical motion vector components MVV: +2, 0, -2. In principle, more values for MVV are possible when more line delays are spent. Since line delays are expensive (require large chip area) tests have been carried out which show that for upconversion purposes these three values are sufficient.

Fig. 12B shows the possible horizontal motion vector components MVH. The symbols used have the following meaning:

□   vertically and horizontally subsampled proscan grid;

○ correct position to calculate motion vectors;
• slightly wrong position to calculate motion vectors.

One feature of the invention is to use a noise measurement for controlling the motion compensated upconversion. One example of noise measurement which could be used in the invention is described in EP-A-0562407 of the applicant.

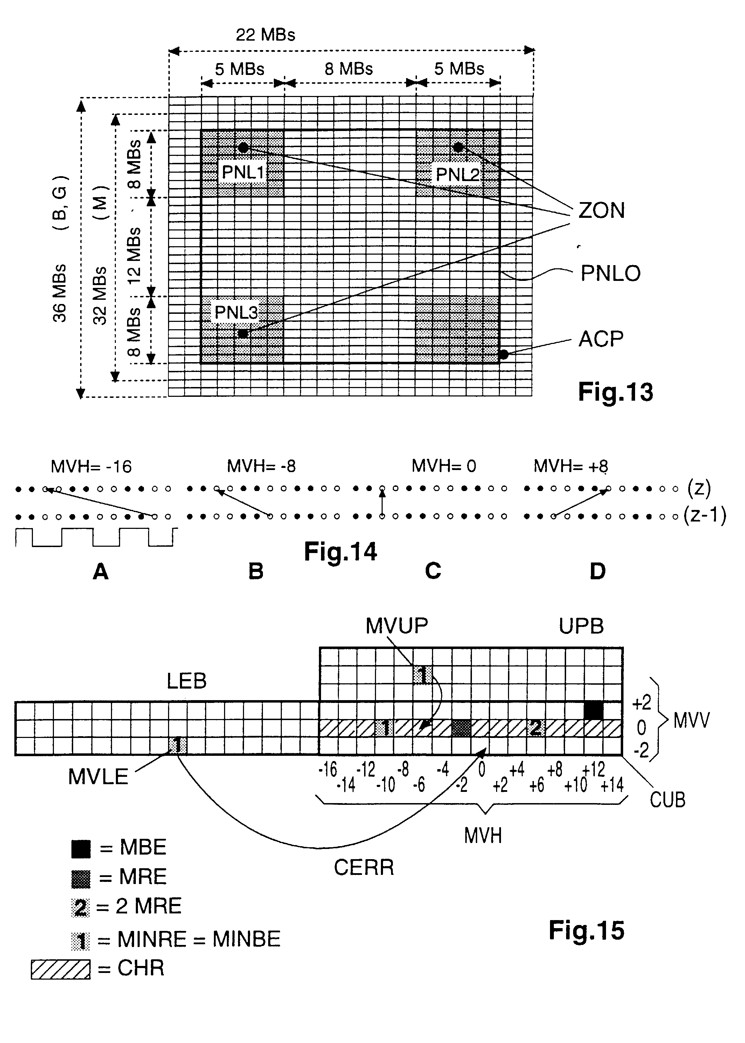

A further noise measurement method will be explained in connection with Fig. 13. In TV standards B and G the active picture ACP has a height of 36 MBs, in TV standard M a height of 32 MBs. One central zone PNL0 or e.g. three (due to a possible picture-in-picture feature) zones PNL1, PNL2 and PNL3 may be used to measure the noise. First, the minimum main block error for each zone is calculated and, second, the three minima are median filtered to give the preliminary noise level PNL. In the current source field z is:

$$PNL = MEDIAN\ [PNL1,\ PNL2,\ PNL3]$$

PNL is divided by 16:

$$PN_{(z)} = PNL/16$$

The final noise level $N_{(z)}$ is formed by a further median filtering:

$$N_{(z)} = MEDIAN\ [N_{(z-1)}+2,\ [PN_{(z)}+PN_{(z-1)}]/2,\ N_{(z-1)}-2] \qquad \{truncation\}$$

Hence, the noise estimate is updated once per input field and may change from field to field by a maximum of ±2. Since $N_{(z)}$ is not known until the end of the current active field, the $N_{(z)}$ can be updated during the blanking period following the calculation of the MBMVs. The $N_{(z)}$ is used by the adaptive temporal noise reduction. In case of 11 bit word length $N_{(z-1)}$ is limited to between 2 and 2045 to avoid underflow and overflow when calculating above median value. $N_{(z)}$ or part of its bits and can be readable via I2C bus.
Power-up initialisation: PNL, $PN_{(z)}$, $PN_{(z-1)} = 0$, $N_{(z-1)} = 2$.

A further feature of the invention is to detect and to take into account periodic structures for controlling the motion compensated upconversion, i.e. for correcting the motion vectors having been found by the two-sided block matching. One example of a periodic structure detection which could be used in the invention is described in EP-A-94115732 of the applicant.

In periodic structures the motion estimation is very hazardous. There are several vectors giving a very good match, i. e. a very small error. Therefore a periodic structure correction, preferably in horizontal direction, is carried out. From the block matching process a corresponding error for every possible main block motion vector is known. Theoretically, a periodic structure in horizontal direction results in several error minima within a row, as can be seen from Fig. 14A to D, but also in several error maxima within the same row. In Fig. 14 the upper row of pixels depicts line n of source field (z) and the lower row line n of source field (z-1). Fig. 14A, B, C, D, respectively, show a first, second, third and fourth possible motion vector for the periodic picture brightness signal (e.g. a fence) depicted in lower Fig. 14A. Hence, if there is a big difference between the maximum and the minimum error and if there is a true second minimum error the current main block is deemed to contain a periodic structure. In case it is confirmed that this block contains a periodic structure then the motion vector belonging to either the upper or the left neighbour main block, that one giving the smaller error, replaces the motion vector found for the current main block. In case of equality preference is given to the left main block vector.

For the first, i.e. upper left, main block in the field the periodic structure correction is switched off. For the remaining part of the first main block row only the left candidate is available. For the remaining part of the first main block column only the upper candidate is available. This leads to the following algorithm:

```
If [(there is a true 2nd Min Row Error)
and (2nd Min Row Error - Min Row Error < Max Block Error/2)]
    then
        (if   current block is not most left
            then   MBMV = MBMV_left
        if   current block is not most up
        and   MBMV_up gives better match
            then   MBMV = MBMV_up )
    else   MBMV = MBMV(corresponding to Min Block Error).
```

The 2nd Min Row Error must be a true minimum with higher errors at each horizontal side. Therefore it is considered that the borders of a row represent a very small error, i.e. error = zero.
The 2nd Min Row Error is only used to decide whether the current block is periodic or not and hence, if there are several equal 2nd Min Row Errors, it does not matter which one is finally used.

Fig. 15 gives an example showing a current vector range block CUB, a corresponding left block LEB and upper block UPB. MVH is the horizontal motion vector component, MVV is the vertical motion vector component, MVUP is the location of a chosen motion vector from the upper block and MVLE is the location of a chosen motion vector from the left block.
MBE is the location of the maximum block error, MRE is the location of the maximum row error, 2MRE is the second minimum row error, MINRE is the minimum row error which is in this example equal to the minimum block error MINBE, CHR is the chosen row which corresponds to the row with the minimum block error. The arrows starting with locations MVLE and MVUP, respectively, represent such replacement vectors from the adjacent blocks which are chosen according to the corresponding minimum error CERR.

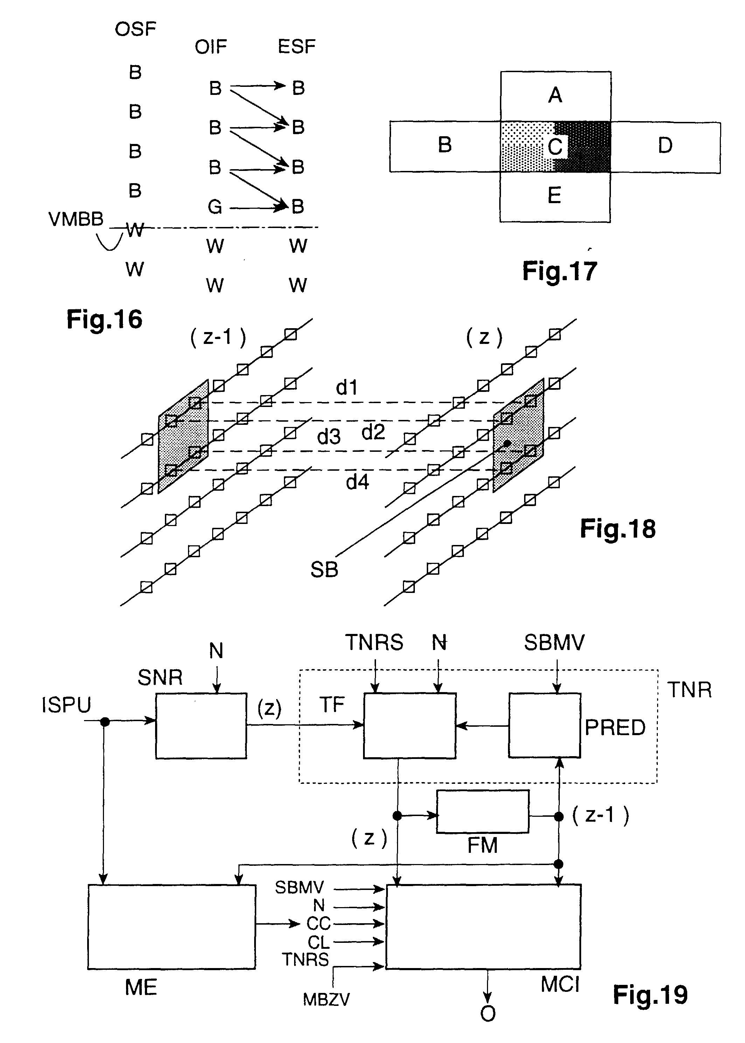

In even output fields the horizontal motion vector component MVH has a slightly bias towards zero to avoid some ambiguity due to noise. The vertical motion vector component MVV suffers a stronger bias towards zero owing to the vertical interpolation of one of the two fields used to calculate the motion vectors. It is important to avoid problems on vertical transitions as depicted in Fig. 16 with a vertical main block border VMBB. Between an odd source field OSF and an even source field ESF an odd interpolated field OIF is formed.
For example, B is a black pixel of value 16, G is a grey pixel of value 128 and W is a white pixel of value 240. Then MBMV(0,0) gives an error of 16 pixels * value 128 = 2048 from the lowest row in the main block above VMBB. MBMV (0,+2) gives an error of zero.

Zero forcing vertical:

```
If     Error(h, 0) ≤ [Error(h, v) + 2048]
    then   MBMV = h, 0
    else   MBMV = h, v
```

Zero forcing horizontal (use result from above):

```
If     Error(0, v) ≤ [Error(h, v) + 64 + ZFE * N_(z)/4]
    then   MBMV = 0, v
    else   MBMV = h, v
```

ZFE = Zero Forcing Even fields. ZFE = 0, 1, 2 or 4, can be programmable via I2C-Bus. Default: ZFE = 1. $N_{(z)}$ is the noise level mentioned above.

Zero forcing in output field 3:
Field OF3 is very critical, leading to line flicker, if existing zero motion is not detected. But since the horizontal and the vertical zero forcing to calculate the MBMVs is separated the MBZVs can directly be deduced from the MBMVs.

$$If \quad (MBMV = 0) \quad then \quad MBZV = 0$$
$$else \quad MBZV = 1$$

The algorithm so far described provides one motion vector per main block. MVH has 16 possible values and can be coded with 4 bits. MVV has 3 possible values and can be coded with 2 bits. A complete active picture (see Fig. 13) has 36*22 main blocks which leads to 792 main blocks per current picture (z) which are stored in the vector memory RAM in ME with a word length of 6 bits each. This vector memory stores also the values of the main block zero vectors MBZV for the calculation of output field OF3.

The next step is to use this information to calculate motion vectors specific to smaller areas known as subblocks which have a size of e.g. 2*2 pixels on the subsampled proscan grid or 4*4 pixels on the proscan grid. One example of subblock motion vector calculation is described in EP-A-94113494 in more detail. The advantage therefrom is that the subblock motion vectors are calculated directly before they are required and therefore need not to be stored, resulting in a low-capacity RAM in ME. The main block vectors are calculated in a first field, the subblock motion vectors are calculated in the next field.
As motion vector for a particular subblock one of the three spatially nearest neighbour main block motion vectors will be chosen by applying them to the specific subblock and calculating the three corresponding subblock errors SE.

In Fig. 17 the main block C is divided into four areas. Candidate motion vectors for subblocks in the upper left area are chosen from the motion vectors of the nearest main blocks A, B and C. Candidate motion vectors for subblocks in the upper right area are chosen from the motion vectors of the nearest main blocks A, C and D. Candidate motion vectors for subblocks in the lower left area are chosen from the motion vectors of the nearest main blocks B, C and E. Candidate motion vectors for subblocks in the lower right area are chosen from the motion vectors of the nearest main blocks C, D and E.

The subblock errors are calculated by accumulation of the four pixel differences $d_i$ within the area of subblock SB between field (z) and field (z-1), see Fig. 18:

$$SE(x,y) = |d_1| + |d_2| + |d_3| + |d_4|,$$

wherein x,y are the components of one of the three main block motion vectors.
The mainblock motion vector MBMV(x,y) leading to the minimum error SE(x,y) is preliminary chosen for the current block. Subsequently, a 3-tap horizontal median filtering operation is performed for each component SBMVH and SBMVV of the subblock motion vectors to erase single erroneous vectors. The resulting motion vector is then used to calculate the even output field pixels belonging to this subblock. x and y is also the horizontal and vertical subblock position , respectively.

Advantageously, the above calculated subblock error, SE, is directly representative for the confidence of the motion vectors. If SE has a small numerical value the confidence CL is high and vice versa. EP-A-94115733 of the applicant describes a confidence measurement in more detail.
CL can also be calculated in ME in the following way:

$$CL'' = median[SE_{(x-1)}/2, SE_{(x)}/2, SE_{(x+1)}/2]$$

$$CL = CL''/CLdiv \qquad\qquad \{truncation\}$$

CL is e.g. limited to 8 bit. CLdiv is a preselected factor 1, 2, 4, 8, which is programmable e.g. via I2C bus. Default: CLdiv = 2.
The horizontal median filter is applied in order to ensure that, if the confidence is good on both sides of a block boundary, it remains good across a boundary, where the unfiltered confidence is poor.
For a soft switch used in the chrominance processing a chroma confidence CC can also be calculated in ME: CC = CL/2.
Further, a temporal noise reduction on/off signal TNRS depending from the confidence CL and noise level N is created in ME as follows:

$$If\ (CL*CLdiv\ <\ 2*N) \qquad then\ TNRS\ =\ 1 \qquad else\ TNRS\ =\ 0$$

A further feature of the invention is noise reduction. There are two stages of noise reduction, namely the spatial noise reduction SNR and the temporal noise reduction TNR. The spatial noise reduction is preferably performed on luminance only but can be applied to chrominance also, whereas the temporal noise reduction is preferably performed on both, luminance and chrominance. Fig. 19 shows the common principle for noise reduction in the embodiments according to Fig. 1 to 6. Additional processing time or line delays are not shown. The sped-up input signal ISPU is first processed in SNR means. However, the order of SNR and TNR could also be vice versa.

The spatial noise reduction SNR can be controlled by the noise level N and is bypassed when N is low, e.g. N≤4, in order to avoid possible resolution degradation. N comes from motion estimator ME. The spatial noise reduction may be enabled/disabled via I2C bus. Default = enabled.

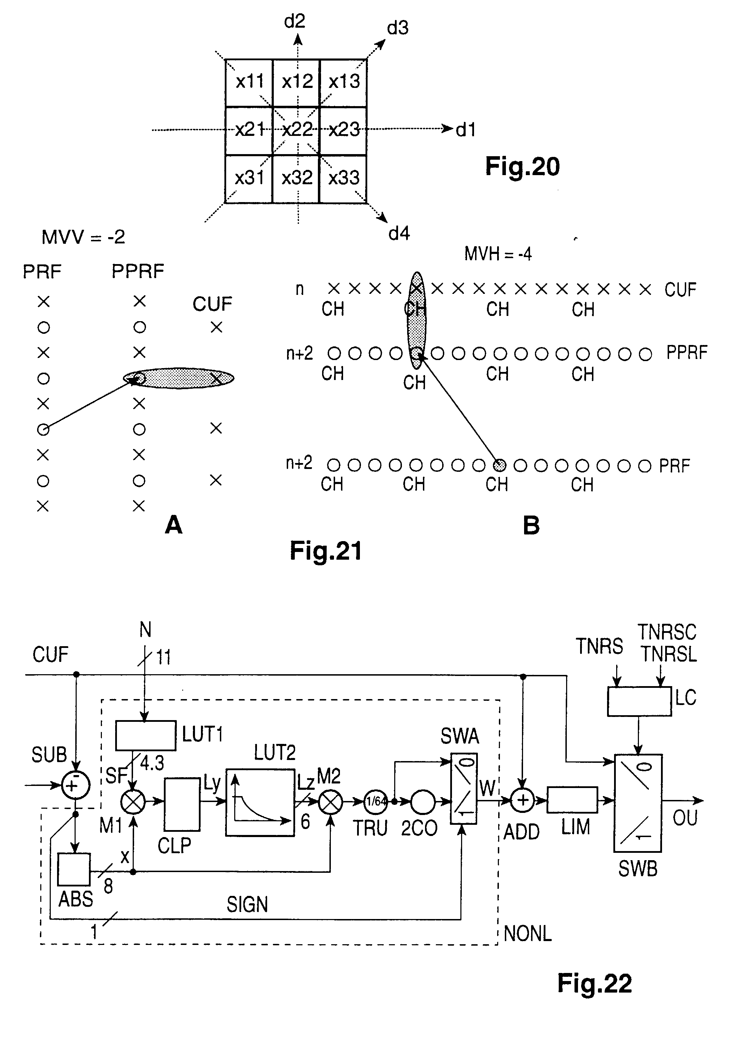

The spatial noise reduction filter may comprise a horizontal and/or vertical and/or diagonal lowpass filter and/or may comprise a two-dimensional or a directional median filter as depicted in Fig. 20. In case of directional filtering the filter direction is a function of the correlation of the central pixel with the corresponding neighbouring pixels.

The filter of Fig. 20 operates in a window of e.g. 3*3 pixels and reduces impulse noise but preserves texture, details and edges and works in the following way:

The arrows dl to d4 depict filtering directions with the pixel values x11 to x33.

Four corresponding correlations are formed:

k1 = min(lx21-x22l, lx22-x23l)
k2 = min(lx12-x22l, lx22-x32l)
k3 = min(lx13-x22l, (x22-x31l)
k4 = min(lx11-x22l, lx22-x33l)

Four corresponding filtering results are formed:

m1 = median(x21, x22, x23l)
m2 = median(x12, x22, x32l)
m3 = median(x13, x22, x31l)
m4 = median(x11, x22, x33l)

The filtering result corresponding to the direction of the minimum correlation is selected as final output pixel value at location x22. In case there is more than one minimum preference can be given e.g. in the following order: m1, then m2, then m3, otherwise m4.

In case of a larger window and maybe other directions corresponding calculations are carried out.

Referring again to Fig. 19, the output of SNR passes a temporal noise filter TNR the output of which is input to motion compensated interpolator MCI. Basically, the temporal filter combines data from different fields including the current field. Advantageously, the temporal filter TF (luminance and chrominance) can be a recursive filter with a non-linear coefficient. It is accompanied by the predictor PRED, the interpolator MCI and the field delay FM. TF is controlled by TNRS and N. PRED receives the output signal of field memory FM and subblock motion vectors SBMV from motion estimator ME. For luminance, the predicted subblocks from the spatially and temporally noise reduced source field (z-1) are considered in TF together with the spatially noise reduced source field subblocks of field (z) coming from SNR. The TNR output signal comprises spatially and temporally noise reduced subblocks for source field (z).

If due to noise a wrong motion vector is calculated the recursive temporal filter could propagate this error in terms of partly wrong video information at the wrong spatial position, because ME makes use of motion compensated signals which have been constructed using previously calculated motion vectors. Hence, the calculation of temporally following motion vectors could be wrong. Advantageously, due to the coefficient applied in the temporal noise reduction to the predicted video information, this disturbing effect is decaying from field to field. Careful tests have shown that in fact such errors do not propagate and that therefore the inventive cheaper MCU circuitry can be used.

The coefficient mentioned above allows to add a share of only up to about 3/4 of the predicted video signal to the video signal of the current field. If, e.g. in case of noisy source signals the confidence CL for the motion vectors is lower this share will be reduced and thereby the possible error propagation is decreased even more.

MCI receives from ME the signals SBMV, N, CL, CC and MBZV, the latter of which is the main block zero motion vector from the last motion estimation for source field (z-1).

Luminance processing for the temporal noise reduction on/off signal TNRS:

```
if (TNRSL enabled [via I2C-Bus]) and (TNRS = 1)
    then  temporal noise reduction luma is switched on
    else  it is bypassed in order to avoid blurring due to
          estimation failure
```

Default = TNRSL enabled
Chrominance processing for signal TNRS:

```
if (TNRSC = forced [via I2C-Bus]) or if (TNRS = 1)
    then  temporal noise reduction chroma is switched on
    else  it is bypassed.
```

Default: TNRSC forced

Predictor PRED makes use of the subblock motion vectors SBMV to project the previous field in motion direction and, due to interlace, performs an interpolation, e.g. a vertical average, to generate the missing pixels for a non-interlaced picture. Fig. 21A shows an example for MVV=-2 and Fig. 21B for MVH=-4. The projected previous field PPRF is located at the position of the current field CUF. Line n+2 of the projected field is located at the position of line n+2 of the current field.

X denotes input pixels, ○ denotes vertically (1/2, 1/2) interpolated pixels, CH denotes the position of chroma pixels, ⊂⊃ denotes the pixels which are used by the temporal filter TF.

The temporal luminance filter receives the spatially noise reduced current field (z) and the spatially and temporally noise reduced last source field (z-1) coming out of the predictor. The combination, preferably non-linear combination, of both gives the spatially and temporally noise reduced luminance input fields (z) for MCI.

The temporal chrominance filter receives the current field (z) and the temporally noise reduced last source field (z-1) coming out of the predictor. The combination, preferably non-linear combination, of both gives the temporally noise reduced chrominance input fields for interpolator MCI.

Fig. 22 shows an embodiment of a temporal filter. In subtraction means SUB the current source field CUF is subtracted from the predicted previous field PPRF. The output signal controls with one bit representing the sign a first switch SWA and passes through absolute value means ABS to first M1 and second M2 multiplying means. M1 is controlled by a scale factor SF which is output from a first look-up table LUT1 which has noise level N as its input signal. The output signal of M1 passes through clipping means CLP and a second look-up table LUT2, having input signal Ly and output signal Lz, to the second input of M2. The output of M2 passes through truncation means TRU to a first input of switch SWA and through further two's complement means 2CO to the second input of switch SWA. The output signal of SWA is added to the current source field CUF in combining means ADD. The output signal of ADD is fed via limiting means LIM to the second input of a second switch SWB. The current source field CUF is fed to the first input of switch SWB. This switch is controlled by a logic LC which receives the input signals TNRS and (e.g. via I2B bus) TNRSL / TNRSC and performs the processing described above. The temporal noise filter is switched on when the second input of SWB is connected to the output OU. Output signal OU is fed to field memory FM and interpolation means MCI. CLP may clip to value 175 and TRU may perform a division by 64. The circuitry between SUB and ADD represents a non-linearity NONL which gives a weight between CUF and PPRF in the output signal OU. The calculations within TF are done using two's complement everywhere.

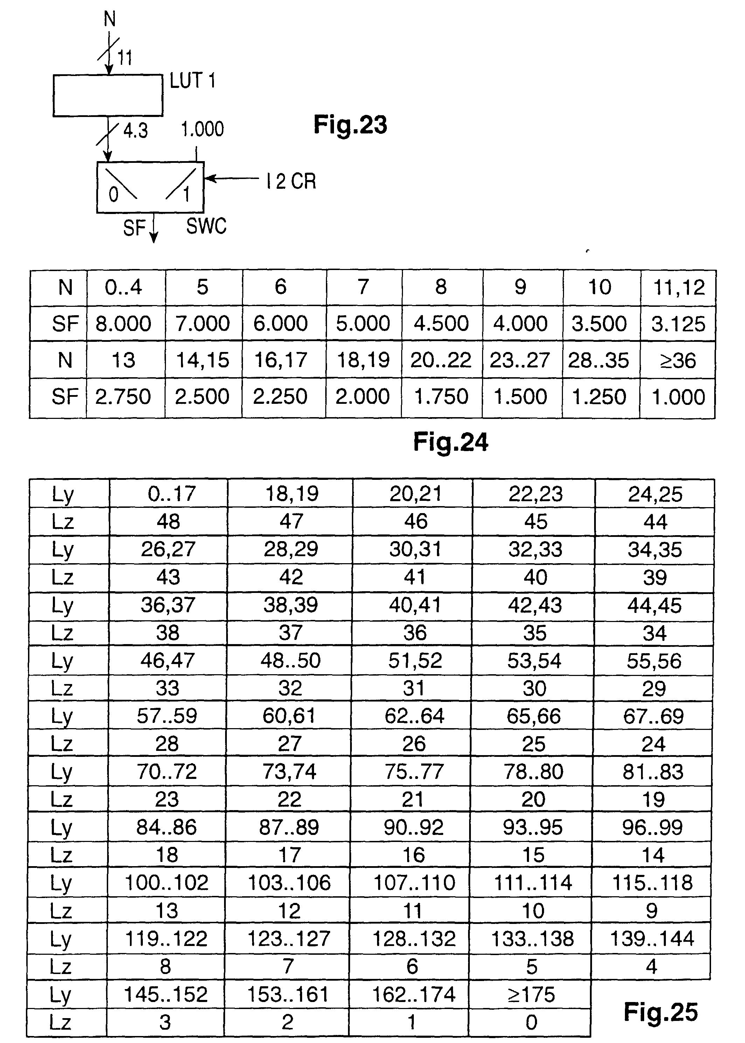

An improved performance of the temporal noise reduction is given if the non-linearity NONL is adapted to the measured noise level N. This means, that for each noise level ranging from e.g. 17dB to 36dB, in steps of about 1dB, a different non-linearity should be used. LUT2 gives the desired output values. However, in order to keep look-up table LUT2 as small as possible, the value N is transformed by means of look-up table LUT1 into the scale factor SF. This scale factor is applied to the input values of NONL. TRU forms another compensating scale factor which is applied to the output values of the non-linear function NONL. Possible values for LUT1 are given in Fig. 24 and possible values for LUT2 are given in Fig. 25.

The chrominance temporal filter (which is similar to the luminance temporal filter) may contain additionally a third switch SWC as depicted in Fig. 23. If the motion compensated upconversion comprises a cross-colour reduction the output of the chroma look-up table LUT1 is set to e.g. 1.0 by means of switch SWC.

Default: SWC switched to 1.

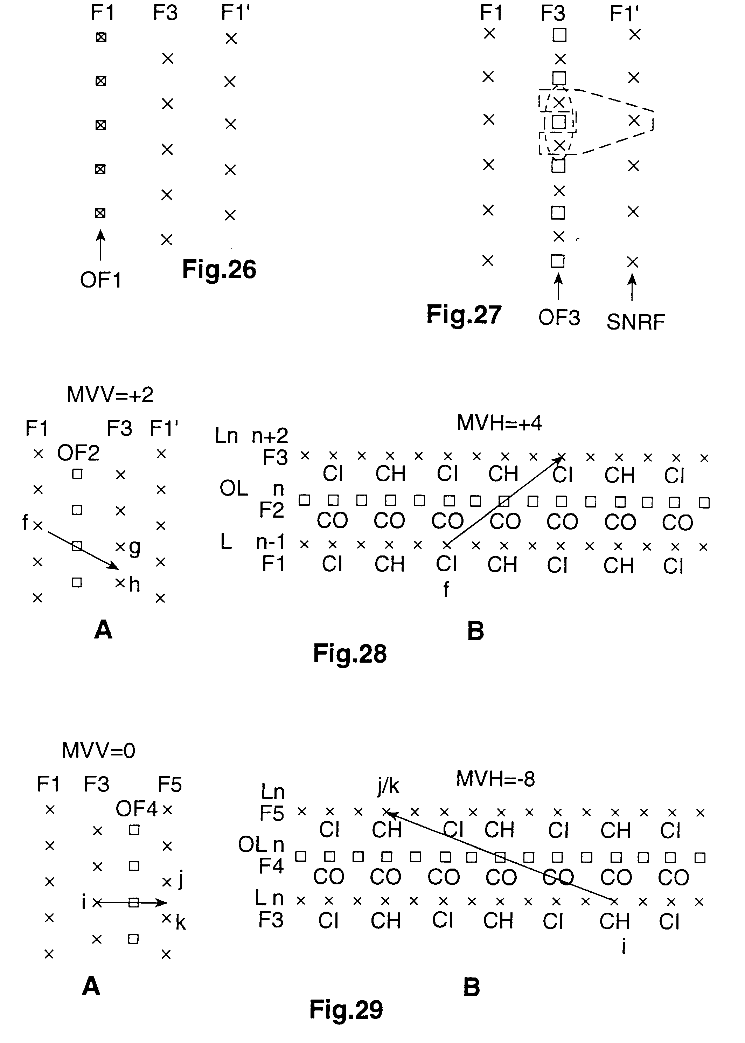

Motion compensated interpolator MCI produces four output fields for every two input fields. Odd first output field OF1 is the noise reduced source field F1 as shown in Fig. 26. F1' is the first field from the next input source frame.

In figures 26 to 31, X denotes input pixels, □ denotes output pixels, CH denotes chroma source pixels, CI denotes horizontally interpolated chroma pixels and CO denotes chroma output pixels. Note that in Fig. 28B to 31B due to the double sided block matching CI pixels are required for the positions of which lie not within the multiple-of-four grid used in the chrominance predictor PRED.

The processing for the third output field OF3 is very special, see Fig. 27. The grid of the noise reduced source field F3 does not match with the grid of the output field OF3, owing to interlace and upconversion. Therefore, depending on the value of the main block zero vector MBZV, one of two different filter types is applied to construct the pixel values for OF3, e.g. a vertical-temporal median filter and a vertical filter with coefficients (1/2, 1/2):

$$\textit{If} \quad \text{MBZV(z-1)} = 0 \quad \textit{then} \quad \text{vertical-temporal median filter}$$
$$\textit{else} \quad \text{vertical filter.}$$

The area with dashed boundaries depicts the pixels involved in the vertical-temporal median filter. Area $^0$ shows the pixels involved in the vertical filter.

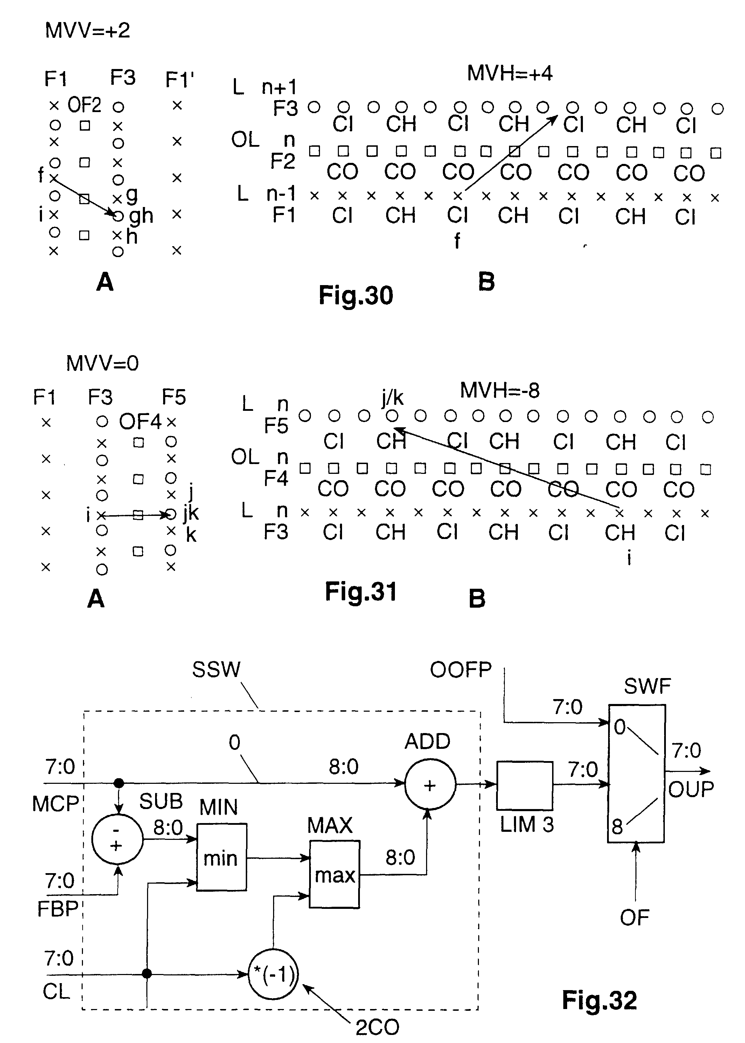

For each pixel in the even output fields OF2 and OF4 a motion compensated pixel and a fall back pixel is calculated. The final luminance output is then, depending on the confidence CL, a combination of the motion compensated pixel value and the fall back pixel value by means of a soft switch which is depicted in Fig. 32.

Advantageously, different processing modes can be used for calculating OF2 and OF4 pixels and these modes can be made selectable via I2C bus.

Mode 1 (default):

A vertical temporal median filter is used like that described with Fig. 27. The pixels of output field OF2 are constructed by taking the vertical temporal median (applied in the direction of motion) of the noise reduced field F1 and field F3. In other words, the output pixel is the median value of the pixels f, g and h as shown in Fig. 28A for the vertical vector component MVV and in Fig. 28B for the horizontal vector component MVH. Fig. 28B shows (in the horizontal-temporal domain) the output line n (OLn) of field F2 between lines n and n+2 (Lnn+2) of field F3 and line n-1 (Ln-1) of field F1.

The pixels of output field OF4 are constructed by taking the vertical temporal median (applied in the direction of motion) of the noise reduced field F3 and field F5. In other words, an out-put pixel is the median value of the pixels i, j and k as shown in Fig. 29A for the vertical vector component MVV and in Fig. 29B for the horizontal vector component MVH. Fig. 29B shows (in the horizontal-temporal domain) the output line n (OLn) of field F4 between line n (Ln) of field F5 and line n (Ln) of field F3.

The fall back pixels for OF2 and OF4 are calculated like the motion compensated pixels above but zero motion is assumed, i.e. SBMV = (0,0). Fallback pixels can also be calculated according to EP-A-94115634 of the applicant.

Mode 2:

A linear average filter is used like that described with Fig. 27. Output field OF2 is the linear average of the noise reduced field F1 and field F3. In other words, an output pixel is 1/2 of pixel f and 1/2 of pixel gh as shown in Fig. 30A for the vertical vector component MVV and in Fig. 30B for the horizontal vector component MVH. Fig. 30B shows (in the horizontal-temporal domain) the output line n (OLn) of field OF2 between lines n+1 (Ln+1) of field F3 and line n-1 (Ln-1) of field F1.

Output field OF4 is the linear average of the noise reduced field F3 and field F5. In other words, an output pixel is 1/2 of pixel i and 1/2 of pixel jk as shown in Fig. 31A for the vertical vector component MVV and in Fig. 31B for the horizontal vector component MVH. Fig. 31B shows (in the horizontal-temporal domain) the output line n (OLn) of field OF4 between lines n (Ln) of field F5 and line n (Ln) of field F3.

As for mode 1, in mode 2 the fall back pixels for OF 2 and OF4 are calculated like the motion compensated pixels as described above, but zero motion is assumed, i.e. SBMV = (0,0).

The circuitry of Fig. 32 is arranged at the output of MCI. Odd output field pixels OOFP are fed to the first input of a switch SWF. The motion compensated pixels MCP are fed to a first input of a soft switch SSW. Fall back pixels are fed to a second input of SSW and the confidence value CL to a third input of SSW. The output signal of SSW passes through limiting means LIM3 (limiting to 0...255) to the second input of switch SWF. In odd output fields the first input of SWF is connected using control signal OF to output OUP. In even output fields the second input of SWF is connected to output OUP.

SSW can be constructed in the following way:

The signal from the first input is subtracted from the signal of the second input in subtracting means SUB. The output is fed to the first input of minimum calculation means MIN. The confidence signal CL from the third input is passed to the second input of MIN and via two's complement means 2CO to the second input of maximum calculation means MAX. The first input of MAX receives the output signal of MIN. The output signal of MAX is added to the input signal of the first SSW input in combining means ADD, the result of which is fed to the output of SSW.

Chrominance processing

Basically, the chrominance (U and V) processing can be performed according to the luminance processing. Insofar the block diagrams are used in a similar way for processing the chrominance where not stated oppositely. Preferably, there are one or more of the following differences:

1) The horizontal component MVH of the motion vector is rounded to the nearest multiple of 4 before being applied to the chrominance to match to the chrominance sampling grid, see Fig. 21. The following table shows how the components of the motion vectors coming out of ME are applied in PRED and MCI for luminance and chrominance:

| PRED luma | MCI luma | MCI luma | PRED chroma | MCI chroma | MCI chroma |
|---|---|---|---|---|---|
| MVV | Fb | Ff | MVV | Fb | Ff |
| +2 | -1 | +1 | +2 | -1 | +1 |
| 0 | 0 | 0 | 0 | 0 | 0 |
| -2 | +1 | -1 | -2 | +1 | -1 |
| MVH | Fb | Ff | MVH | Fb | Ff |
| +14 | -7 | +7 | +12 | -6 | +6 |
| +12 | -6 | +6 | +12 | -6 | +6 |
| +10 | -5 | +5 | +8 | -4 | +4 |
| +8 | -4 | +4 | +8 | -4 | +4 |
| +6 | -3 | +3 | +4 | -2 | +2 |
| +4 | -2 | +2 | +4 | -2 | +2 |
| +2 | -1 | +1 | 0 | 0 | 0 |
| 0 | 0 | 0 | 0 | 0 | 0 |
| -2 | +1 | +1 | 0 | 0 | 0 |
| -4 | +2 | -2 | -4 | +2 | -2 |
| -6 | +3 | -3 | -4 | +2 | -2 |
| -8 | +4 | -4 | -8 | +4 | -4 |
| -10 | +5 | -5 | -8 | +4 | -4 |
| -12 | +6 | -6 | -12 | +6 | -6 |
| -14 | +7 | -7 | -12 | +6 | -6 |
| -16 | +8 | -8 | -16 | +6 | -6 |
| Fb means field backward, Ff means field forward. | | | | | |

2) To allow point 1), additional horizontal linear average filters are needed within the interpolator MCI. Hence, a 4:2:2 for; mat is produced from the 4:1:1 format before the motion vectors are applied to the chrominance pixels.

3) No spatial noise reduction SF is carried out.

4) The interpolation for the even output fields is done like in MODE 2 for luminance (linear average, no programmability).

5) Chrominance confidence CC (used for SSW chroma only), is a half of that of the luminance confidence CL: CC = CL/2 .

6) 4:2:2 $\rightarrow$ 4:4:4 conversion using linear average (1/2, 1/2).

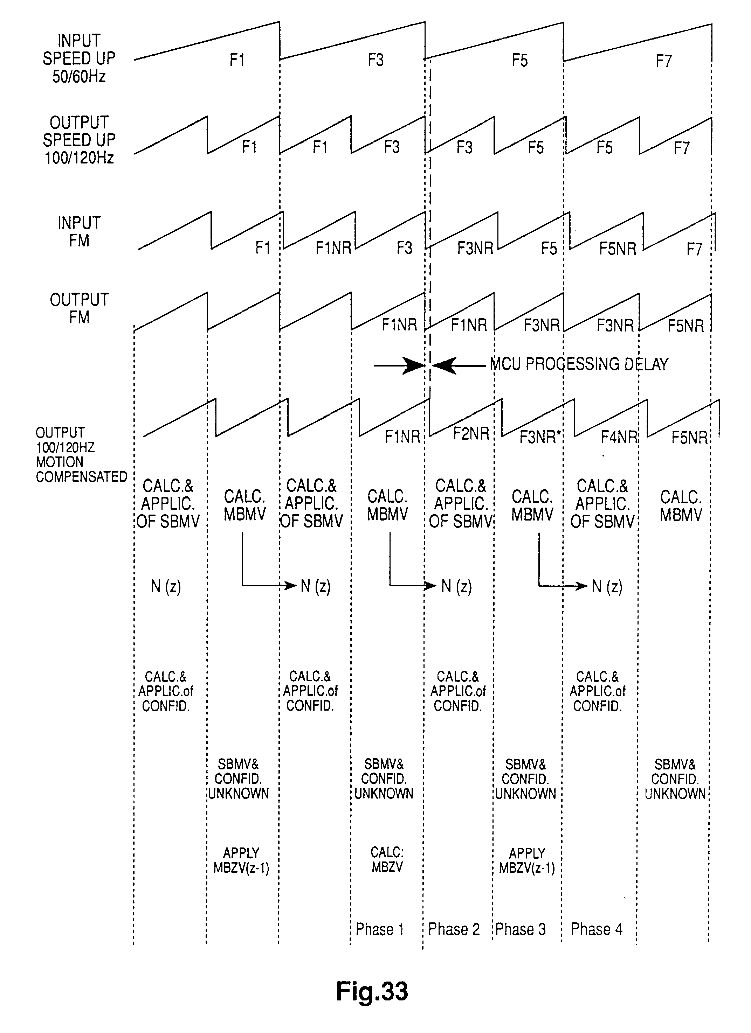

Fig. 33 shows a global timing diagram for the input and output signal of SPUFM, for the input and output signal of FM and for the output signals of ME and MCI. F1NR ... F5NR means noise reduced fields.

There is a special calculation for F3NR". As described above, in case of a main block zero motion vector MBZV value 0 a vertical temporal median filter is applied which has access to the not yet noise reduced field F5. Since SBMV and CL are unknown, MBZ-V(z-1) is applied. This causes a small temporal error. However, tests have shown that this error is negligible.

The inventive MCU can be further improved by performing a vertical and/or horizontal peaking and/or sin(x)/x correction, preferably for luminance. Fig. 35 shows a corresponding block diagram.

The vertical peaking VPEA can be an intrafield peaking which amplifies vertical contours. To avoid amplification of noise a noise level dependent coring function COR2 is applied to the vertically high pass filtered signal which then is multiplied by a pre-selectable factor PV, e.g. by I2C bus. The high pass filter may comprise two line delays H, an adder, an 1/2 truncator TR5 and a subtractor in which the average of a line n-1 and a line n+1 pixel is subtracted from the respective line n pixel. Multiplier PV is followed by an 1/4 truncator TR6.

The horizontal peaking HPEA amplifies horizontal contours. The amplification maximum is e.g. at 6.75Mhz in the 100Hz domain. To avoid amplification of noise a noise level dependent coring function COR1 is applied to the horizontally high pass filtered signal which then is multiplied by a pre-selectable factor PH, e.g. by I2C bus. The high pass filter may comprise a chain of pixel delays T, an adder, an 1/2 truncator TR3 and a subtractor in which the average of a pixel m-2 and a pixel m+2 in the current line is subtracted from pixel m. Multiplier PH is followed by an 1/4 truncator TR4.

The sin(x)/x corrector SIXC needs not to be programmable and to depend on the output clock rate. The deviation from an ideal sin(x)/x correction is very small, i.e. from 0 to 8MHz the deviation is less than 0.14dB and from 8 to 11MHz the deviation is less than -0.74dB. The sin(x)/x corrector can make use of the above mentioned chain of pixel delays T and comprises further an adder, an 1/2 truncator TR1 and a subtractor in which the average of a pixel m-1 and a pixel m+1 in the current line is subtracted from pixel m. The subtractor is followed by an 1/8 truncator TR2. The outputs of HPEA and VPEA are combined in an adder AHV using respective delays T. The output of AHV is limited in a limiter LIM2 to a preselected value PL and is then combined in adder VHS with the output of SIXC and the pixel m. The result is limited in a further 0 to 255 limiter LIM1. Delays T may have a delay time of 1/27MHz. The ranges and default values for PV, PH and PL can be as follows:

Range:
PV = 0 to 7, PH = 0 to 7, PL = 7, 15, 31 or 63.
Default:
PV = 4, PH = 4, PL = 15.

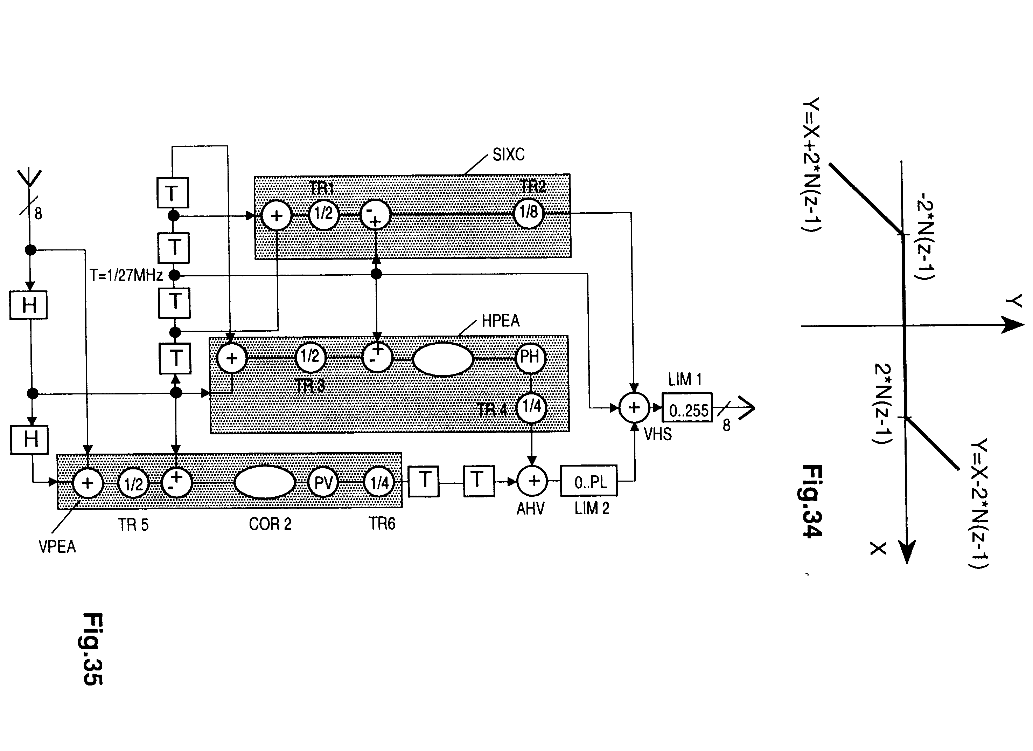

Fig. 34 shows an example for the noise level N dependent coring function COR1 and COR2. X is the input signal and Y is the output signal. A minimum coring is performed according to the following formula:

$$If \quad \left| 2*N(z-1) \ < \ 16 \right| \quad then \quad CORING \ = \ 16$$

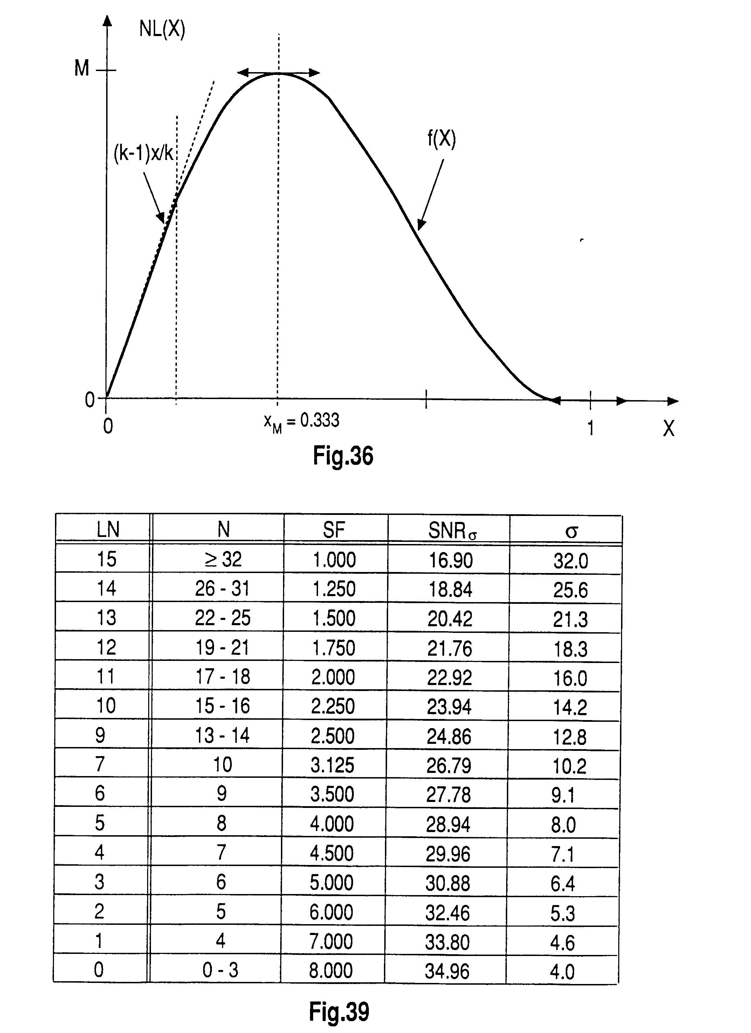

Fig. 36 shows another example for a characteristic or curve NL(x) of a non-linearity NONL. This non-linearity is symmetric, like in connection with Fig. 22: for a negative input (-x) with (x>0) the output is NL(-x) = -NL(x).
For a positive input 0<x<1, this characteristic is defined by:

$$NL(x) = f(x) = \lambda x(x-1)^2 \qquad with \ \lambda = 0.9 \ .$$

This characteristic has its maximum amplitude M at $x_M$=0.333. To ensure quick temporal convergence in the recursive filter, the ratio

$$k = \left| \frac{x}{x - f(x)} \right|$$

is to be limited. Good convergence and efficient noise reduction is obtained with k = 4.
If k increases too much, the filtering is more efficient on static pictures but also the convergence is very slow and therefore the filter could lead to artefacts in the case of unpredictable motion.
If k tends toward '1', it corresponds to a non-filtered output. Consequently, the non-linearity has to be limited in the following way:

$$NL(x) = MIN \left( \left( \frac{k-1}{k} \right) x, f(x) \right) = MIN(0.75x, 0.9x(x-1)^2)$$

This function is to be scaled. The scaling factor can make use of the standard deviation σ of the noise estimate N measured by the upconversion algorithm. In this way, the non-linearity becomes noise adaptive. The scaling factor is such that at the maximum M $x_M = 2σ$. The resulting scaled output is

$$\frac{2σ}{x_M} NL \left( \frac{x}{2σ} x_M \right).$$

Switch SWB of Fig. 22 selects as its output signal the input of the temporal filter instead of its output when the confidence CL and/or CL (and the therefrom derived information TNRS or TNRSL/TNRSC, respectively) on the motion vector is too low, that is when the error measure $σ_{cf}$ is too high, i.e. when $σ_{cf} \geq 4σ$, where σ is the noise standard deviation of N which is calculated in the upconversion module.

So as to preserve a good precision for the non-linearity, it is necessary to implement it with the maximum scale. By this way, the input data will be multiplied - and not divided - by a scale factor greater than '1' when passing through the non-linearity.

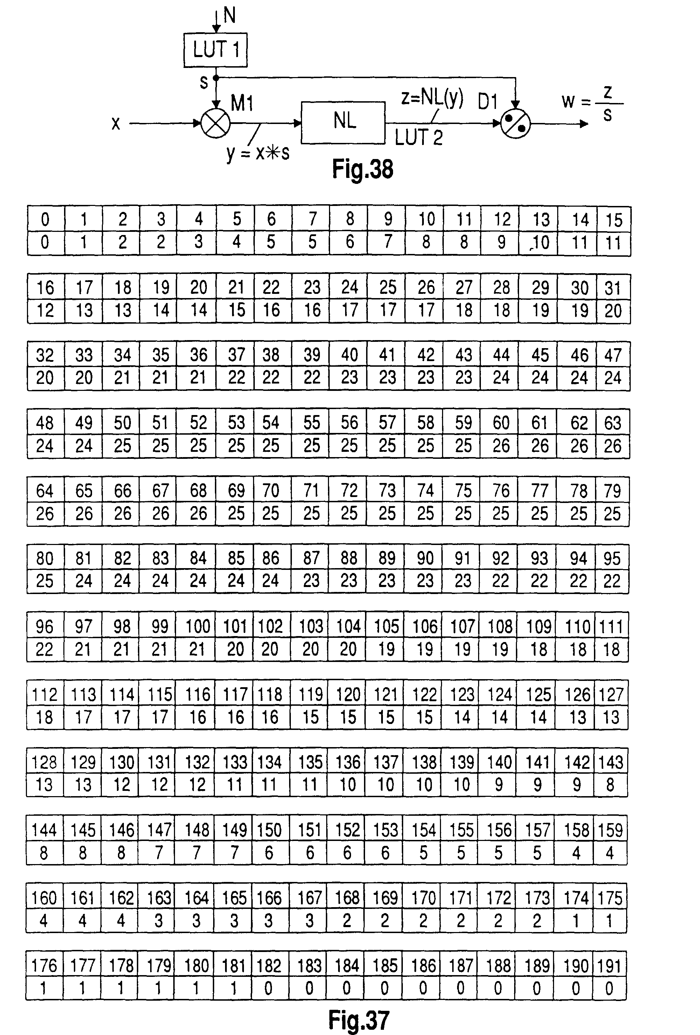

For example, the non-linearity has 192 inputs. As explained below, this number corresponds to the scale value of the maximum noise level. The respective look-up table output values NL(x) are given in Fig. 37.

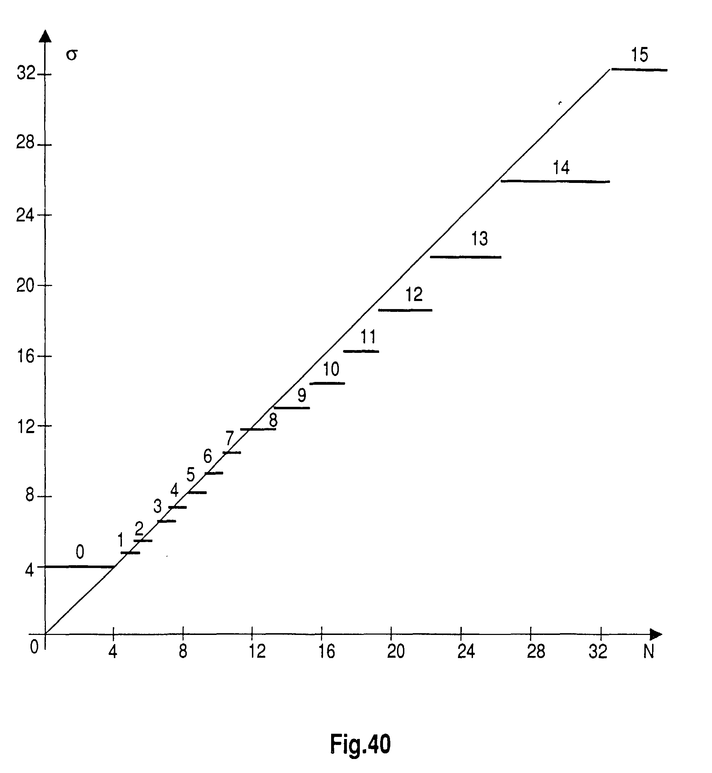

Fig. 38 shows a block diagram for the further embodiment of the non-linearity NONL of Fig. 22 in which the above described non-linearity function NL is used. The NONL input values pass through a multiplier M1 as values y = x*s to the input of a look-up memory LUT2 representing function NL. The output values z = NL(y) of the look-up memory pass through a divider D1 resulting in final output values w = z/s. Value s is supplied to the second inputs of the multiplier and divider from the output of a scale factor look-up memory LUT1 the content of which is given in Fig. 39 and which is controlled by noise estimate N.

The noise is directly produced by the motion estimation process using a block matching method. Therefore, for each block of pixels of the current picture, an error value on the estimated vector is available. This error could be either the sum of the block of absolute pixel value differences between the two compared fields, or the squared root of the sum of the squared differences. The minimum of these block error values over the complete picture is taken as an estimation of the noise variance, whereby it is assumed that at least one block in the picture will contain a nearly flat amplitude area and that therefore its corresponding block error will be caused by noise only. Accordingly, this minimum block error value represents a measure of the noise and can be used to derive therefrom a scaling factor for calibrating the non-linearity.

Advantageously, since the precision on the noise level does not need to be very high the noise level coding can be done in such a way that the scaling of the non-linearity becomes simpler from a hardware point of view.

Considering that on the one hand the human eye is able to detect a 1dB SNR difference between two pictures and that on the other hand the noise level measured by the upconversion algorithm has a 1dB range of variation within a sequence, this precision of 1dB can be selected to code the noise level.

The common noise levels of natural pictures cover a range between 17dB and 36dB. This range can be split into 16 intervals of 1dB each. Therefore, 16 coded levels of noise LN (coefficients) can be used to make the non-linearity noise adaptive.

The array depicted in Fig. 39 shows an example for coding LN. This array is based on the assumption of a look-up table having N = 192 inputs.

N represents the noise value measured by the upconversion algorithm. Scale factor SF is implemented at the input of the non-linearity NONL. $SNR_σ$ and σ represent the exact noise level corresponding to the previous scale factor (scale = $Nx_M/(2σ)$).

The resulting coding function to generate LN from N is depicted in Fig. 40 and shows the deviation introduced in the noise measure. The smallest values are slightly enhanced to compensate for the precision loss in the non-linearity. The highest measures are always coded to a smaller level to limit the effects of a possible over-estimation and to make the curve tending towards an asymptotic value.

The circuitry shown in this invention can be integrated on one or several chips and can be controlled by an I2C bus. Part of the circuitry can be replaced by appropriate software and processor means.

The invention can be used in 4:3 or 16:9 standard definition or high definition units like TV receivers, satellite receivers, VCRs and video disc players.

In case of digital video signals these may be accompanied by motion information. In such case the invention can make use of this already existing motion information, whereby some processing steps concerning the generation of motion information can be omitted or adapted accordingly.

**Claims**

1. Method for motion compensated upconversion of interlaced video signals, including the following steps:

   - converting source fields (I) into fields of doubled field frequency using first memory means (SPUFM);
   - motion estimation (ME) using the input and output of second memory means (FM1) succeeding said first memory means,

   **characterised by:**

   - performing motion compensated interpolation (MCI) on said fields of doubled field frequency using the input and output of third memory means (FM2) and using motion information (MV) from said motion estimation (ME), thereby delivering the motion compensated upconverted output signals (O);
   - spatial noise reduction (SF) and/or succeeding temporal noise reduction (TF), wherein the input signal for said spatial noise reduction or said temporal noise reduction, respectively, is derived from the input signal of said second memory means (FM1) and the final output signal of the noise reduction is fed to the input of said third memory means (FM2).

2. Method for motion compensated upconversion of interlaced video signals, including the following steps:

   - converting source fields (I) into fields of doubled field frequency using first memory means (SPUFM);
   - performing motion compensated interpolation (MCI) on said fields of doubled field frequency using the input and output of second memory means (FM) and using motion information (MV), thereby delivering the motion compensated upconverted output signals (O), wherein the input signal of said second memory means (FM) is derived from the output signal of said first memory means (SPUFM),

   **characterised by:**

   - motion estimation (ME) the first input signal of which is derived from the output of said first memory means (SPUFM) and the second input signal of which is derived from the output of said second memory means (FM), wherein said motion estimation provides said motion information (MV);
   - spatial noise reduction (SF) and/or succeeding temporal noise reduction (TF), whereby the input signal for said spatial noise reduction or said temporal noise reduction, respectively, is derived from the output of said first memory means (SPUFM) and the final output signal from the noise reduction is fed to the input of said second memory means (FM) and to the first input for said motion compensated interpolation.

3. Method according to claim 1 or 2, wherein the temporal noise reduction (TF) is present and is a recursive temporal noise reduction.

4. Method according to any of claims 1 to 3, wherein said motion information includes motion vectors (MBMV) for main blocks (MB) whereas said motion compensated interpolation (MCI) is carried out for subblocks (SB) being smaller than said main blocks.

5. Method according to claim 4, wherein for performing said motion compensated interpolation (MCI), subblock motion vectors (SBMV) are calculated from said main block motion vectors (MBMV) by selecting for each output subblock vector one vector from the main block motion vectors of the three main blocks (A, B; B, E; E, D; D, A) lying nearest to the current subblock including the current main block (C).

6. Method according to any of claims 1 to 5, wherein the spatial noise reduction (SF) of claim 1 or 2 is carried out and is performed on luminance only and wherein the temporal noise reduction (TF) of claim 1 or 2 is carried out and is performed on luminance and/or chrominance.

7. Method according to any of claims 1 to 6, wherein said motion compensated interpolation (MCI) is carried out for luminance and chrominance.

8. Method according to any of claims 1 to 7, wherein in said motion compensated interpolation (MCI) for each pair of source fields four output fields (OF1, OF2, OF3, OF4) are generated whereby:

   - the first output field (OF1) is derived from the first source field of the current pair;
   - the second output field (OF2) is a combination of the first and the second source field of the current pair;
   - the third (OF3) and the fourth (OF4) output field is a combination of the second source field of the current pair and the first source field of the next pair.

9. Method according to any of claims 1 to 8, wherein in said motion estimation (ME) a proscan conversion (Fig. 8) on every second source field is used.

10. Method according to claim 9, wherein in said motion estimation (ME) said proscan conversion is based on a horizontally subsampled pixel grid.

11. Method according to any of claims 1 to 10, wherein in said motion estimation (ME) a two-sided block matching (Fig. 11) is performed.

12. Method according to any of claims 1 to 11, wherein in said motion estimation (ME) a periodic structure detection is performed which is used to correct said motion vectors (MBMV).

13. Method according to any of claims 1 to 12, wherein in said motion estimation (ME) one or both of the components (MVH, MVV) of said motion vectors (MBMV) are forced towards zero depending on a calculated noise level (N).

14. Method according to any of claims 5 to 13, wherein a horizontal or vertical median filtering is performed on one or both components (SBMVH, SBMVV) of said subblock motion vectors (SBMV).

15. Method according to any of claims 5 to 14, wherein for subblock motion vectors (SBMV) a confidence (CL) is calculated from a subblock error (SE) and that for application to chrominance a chrominance confidence (CC) depending on said confidence (CL) is calculated in addition.

16. Method according to claim 15, wherein said spatial (SF) and/or temporal (TF) noise reduction is controlled by said confidence (CL) and chrominance confidence (CC), respectively.

17. Method according to any of claims 1 to 16, wherein the spatial noise reduction (SF) of claim 1 or 2 is carried out and includes a directional filter, e.g. a median filter.

18. Method according to any of claims 1 to 17, wherein said temporal noise reduction (TF) includes a predictor (PRED) for motion compensation of respective pixels from the previous field (z-1).

19. Method according to claim 18, wherein the recursive temporal noise reduction (TF) of claim 1 or 2 is carried out and performs a non-linear combination of pixels from the spatially noise reduced current field (z, CUF) and the spatially and/or temporally noise reduced and motion compensated last source field (z-1, PPRF) coming out of said predictor (PRED).

20. Method according to any of claims 8 to 19, wherein from block matching errors resulting from said motion estimation (ME) a main block zero vector is calculated which controls which of at least two different interpolation filter types is used to construct the third output field (OF3), wherein one of these filter types includes a temporal component.

21. Method according to any of claims 15 to 20, wherein for constructing the second (OF2) and the fourth (OF4) output field, controlled by said confidence (CL) and chrominance confidence (CC), respectively, a combination of:

   - either vertically-temporally interpolated or vertically interpolated pixels for both, the second (OF2) and the fourth (OF4) output field;
   - fallback pixels is used, wherein in both cases the fallback pixels are used without motion compensation.

22. Method according to any of claims 18 to 21, wherein said predictor (PRED) uses chrominance pixels (CH) that are horizontally subsampled by a factor of four with respect to the luminance pixels (O).

**23.** Method according to claim 21 or 22, wherein for constructing the second (OF2) and the fourth (OF4) chrominance output field, controlled by said confidence (CL) and chrominance confidence (CC), respectively, a combination of:

- only vertically interpolated pixels for both, the second (OF2) and the fourth (OF4) output field;
- fallback pixels is used, wherein the fallback pixels are used without motion compensation.

**24.** Method according to any of claims 1 to 23, wherein said motion compensated interpolation (MCI) includes a vertical (VPEA) and/or horizontal (HPEA) peaking and/or sin(x)/x correction (SIXC), at least for luminance.

**25.** Method according to any of claims 13 to 24, wherein said vertical (VPEA) and/or horizontal (HPEA) peaking includes a coring function (COR1, COR2) which depends on said calculated noise level (N).

**26.** Method according to any of claims 19 to 25, wherein the function (f(x)) for performing said non-linear combination has its maximum amount (M) for an input value the amount of which is greater than zero and less than the maximum possible amount of said input value.

**27.** Method according to claim 26, wherein said function (f(x)) has its maximum amount (M) for an input value which in principle has the doubled value of the standard deviation ($\sigma$) of a noise estimate (N) which is calculated in the motion compensated upconversion process.

**28.** Method according to claim 26 or 27, wherein said function (f(x)) is implemented with a maximum scale.

**29.** Apparatus for motion compensated upconversion of interlaced video signals, for carrying out a method according to any of claims 1 to 28, and including:

- first memory means (SPUFM) being used for converting source fields (I) into fields of doubled field frequency;
- succeeding second memory means (FM1) the input and output of which is connected to a motion estimator (ME) which performs field-to-field motion estimation;
- third memory means (FM2) the input and output of which is connected to a motion compensated interpolator (MCI) which performs field-to-field motion compensation and which receives motion information from said motion estimator and which delivers the motion compensated upconverted output signals (O);
- spatial noise reduction means (SF) and/or succeeding temporal noise reduction means (TF), wherein the input signal of said spatial noise reduction means or said temporal noise reduction means, respectively, is derived from the input signal of said second memory means (FM1) and the final output signal of the noise reduction means is fed to the input of said third memory means (FM2).

**30.** Apparatus for motion compensated upconversion of interlaced video signals, for carrying out a method according to any of claims 1 to 28, and including:

- first memory means (SPUFM) being used for converting source fields (I) into fields of doubled field frequency;
- succeeding second memory means (FM) the input signal of which is derived from the output signal of said first memory means and is fed to the first input of a motion compensated interpolator (MCI) which performs field-to-field motion compensation and which receives motion information from a motion estimator (ME) and which delivers the motion compensated upconverted output signals (O), wherein the signal at the second input of said motion compensated interpolator is derived from the output signal of said second memory means;
- said motion estimator (ME) which receives the output signal of said second memory means at its second input and which performs field-to-field motion estimation, whereby the signal at the first input of this motion estimator is derived from the output signal of said first memory means;
- spatial noise reduction means (SF) and/or succeeding temporal noise reduction means (TF), whereby the input signal of said spatial noise reduction means or said temporal noise reduction means, respectively, is derived from the output of said first memory means and the final output of the noise reduction means is fed to the input of said second memory means and to the first input of said motion compensated interpolator.

**31.** Apparatus according to claim 29 or 30, wherein the temporal noise reduction means (TF) is present and is a recursive temporal noise reduction.

**32.** Apparatus according to any of claims 29 to 31, wherein said motion information includes motion vectors (MBMV) for main blocks (MB) whereas said motion compensated interpolation (MCI) is carried out for subblocks (SB) being smaller than said main blocks.

33. Apparatus according to claim 32, wherein for performing said motion compensated interpolation (MCI), subblock motion vectors (SBMV) are calculated from said main block motion vectors (MBMV) by selecting for each output subblock vector one vector from the main block motion vectors of the three main blocks (A, B; B, E; E, D; D, A) lying nearest to the current subblock including the current main block (C).

34. Apparatus according to any of claims 29 to 33, wherein the spatial noise reduction means (SF) of claims 29 or 30 is present and operates on luminance only and wherein the temporal noise reduction means (TF) of claims 29 or 30 is present and operates on luminance and/or chrominance.

35. Apparatus according to any of claims 29 to 34, wherein said motion compensated interpolation (MCI) is carried out for luminance and chrominance.

36. Apparatus according to any of claims 31 to 35, wherein the recursive temporal noise reduction means (TF) of claims 29 or 30 is present and performs a non-linear combination (ADD) of pixels from the spatially noise reduced current field (z, CUF) and the spatially and/or temporally noise reduced and motion compensated last source field (z-1, PPRF) coming out of said predictor (PRED) and wherein a function (f(x)) stored in a first look-up table (LUT2) for performing of said non-linear combination has its maximum amount (M) for an input value the amount of which is greater than zero and less than the maximum possible amount of said input value.

37. Apparatus according to claim 36, wherein said function (f(x)) is implemented with a maximum scale using a further look-up table (LUT1) for generating the input values of said first look-up table (LUT2).

**Patentansprüche**

1. Verfahren zur bewegungskompensierten Erhöhung des Bildfrequenz von Zeilensprung-Videosignalen, das die folgenden Schritte imfaßt:

   - Umwandeln von Quellen-Halbbildern (I) in Halbbilder mit doppelter Halbbildfrequenz unter Verwendung erster Speichermittel (SPUFM);
   - Bewegungs-Abschätzung (ME) unter Verwendung des Eingangs und Ausgangs von zweiten Speichermitteln (FM1), die den ersten Speichermitteln folgen,

   **gekennzeichnet durch:**

   - Durchführen einer bewegungskompensierten Interpolation (MCI) bei den Halbbildern mit der doppelten Halbbildfrequenz unter Verwendung des Eingangs und Ausgangs von dritten Speichermitteln (FM2) und unter Verwendung von Bewegungsinformationen (MV) von der Bewegungsabschätzung (ME), um dadurch die bewegungskompensierten, in der Bildfrequenz erhöhten Ausgangssignale (O) zu liefern;
   - Räumliche Rauschverminderung (SF) und/oder anschließende zeitliche Rauschverminderung (TF), wobei das Eingangssignal für die räumliche bzw. für die zeitliche Rauschverminderung von dem Eingangssignal der zweiten Speichermittel (FM1) abgeleitet und das endgültige Ausgangssignal der Rauschverminderung dem Eingang der dritten Speichermittel FM2 zugeführt wird.

2. Verfahren zur bewegungskompensierten Erhöhung der Bildfrequenz von Zeilensprung-Videosignalen, das die folgenden Schritte umfaßt:

   - Umwandlung von Quellen-Halbbildern (I) in Halbbilder mit der doppelten Halbbildfrequenz unter Verwendung erster Speichermittel (SPUFM);
   - Durchführen einer bewegungskompensierten Interpolation (MCI) bei den Halbbildern mit der doppelten Halbbildfrequenz unter Verwendung des Eingangs und Ausgangs von zweiten Speichermitteln (FM) und unter Verwendung von Bewegungsinformationen (MV), um dadurch die bewegungskompensierten, in der Bildfrequenz erhöhten Ausgangssignale (O) zu liefern, wobei das Eingangssignal der zweiten Speichermittel (FM) von dem Ausgangssignal der ersten Speichermittel (SPUFM) abgeleitet wird,

   **gekennzeichnet durch:**

- Bewegungsabschätzung (ME), von der das erste Eingangssignal von dem Ausgang der ersten Speichermittel (SPUFM) abgeleitet wird und von der das zweite Eingangssignal von dem Ausgang der zweiten Speichermittel (FM) abgeleitet wird, wobei die Bewegungsabschätzung die Bewegungsinformation (MV) liefert;
- Räumliche Rauschverminderung (SF) und/oder anschließende zeitliche Rauschverminderung (TF), wobei das Eingangssignal für die räumliche Rauschverminderung bzw. für die zeitliche Rauschverminderung von dem Ausgang der ersten Speichermittel (SPUFM) abgeleitet und das endgültige Ausgangssignal von der Rauschverminderung dem Eingang der zweiten Speichermittel (FM) und dem ersten Eingang für die bewegungskompensierte Interpolation zugeführt wird.

3. Verfahren nach Anspruch 1 oder 2, bei dem die zeitliche Rauschverminderung (TF) vorhanden ist und eine rekursive zeitliche Rauschverminderung ist.

4. Verfahren nach einem der Ansprüche 1 bis 3, bei dem die Bewegungsinformation Bewegungs-Vektoren (MBMV) für Hauptblöcke (MB) enthält, während die bewegungskompensierte Interpolation (MCI) für Unterblöcke (SB) ausgeführt wird, die kleiner sind als die Hauptblöcke.

5. Verfahren nach Anspruch 4, bei dem zur Durchführung der bewegungskompensierten Interpolation (MCI) Unterblock-Bewegungs-Vektoren (SPMV) aus den Hauptblock-Bewegungs-Vektoren (MBMV) berechnet werden, indem für jeden Ausgangs-Unterblock-Vektor ein Vektor aus den Hauptblock-Bewegungs-Vektoren der drei Hauptblöcke (A, B; B, E; E, D; D, A) ausgewählt wird, der dem gegenwärtigen Unterblock einschließlich des gegenwärtigen Hauptblocks (C) am nächsten liegt.

6. Verfahren nach einem der Ansprüche 1 bis 5, bei dem die räumliche Rauschverminderung (SF) von Anspruch 1 oder 2 nur für die Luminanz ausgeführt wird, und wobei die zeitliche Rauschverminderung von Anspruch 1 oder 2 für die Luminanz und/oder Chrominanz ausgeführt wird.

7. Verfahren nach einem der Ansprüche 1 bis 6, bei dem die bewegungskompensierte Interpolation (MCI) für Luminanz und Chrominanz durchgeführt wird.

8. Verfahren nach einem der Ansprüche 1 bis 7, bei dem bei der bewegungskompensierten Interpolation (MCI) für jedes Paar von Quellen-Halbbildern vier Ausgangs-Halbbilder (OF1, OF2, OF3, OF4) erzeugt werden, wobei:

- das erste Ausgangs-Halbbild (OF1) von dem ersten Quellen-Halbbild des gegenwärtigen Paares abgeleitet wird;
- das zweite Ausgangs-Halbbild (OF2) eine Kombination des ersten und zweiten Quellen-Halbbildes des gegenwärtigen Paares ist;
- das dritte (OF3)- und das vierte (OF4)-Ausgangs-Halbbild eine Kombination des zweiten Quellen-Halbbildes des gegenwärtigen Paares und des ersten Quellen-Halbbildes des nächsten Paares ist.

9. Verfahren nach einem der Ansprüche 1 bis 8, bei dem bei der Bewegungsabschätzung (ME) eine Proscan-Umwandlung (Fig. 8) bei jedem zweiten Quellen-Halbbild verwendet wird.

10. Verfahren nach Anspruch 9, bei dem bei der Bewegungsabschätzung (ME) die Proscan-Umwandlung auf einem horizontal unterabgetasteten Pixel-Gitter beruht.

11. Verfahren nach einem der Ansprüche 1 bis 10, bei dem bei der Bewegungsabschätzung (ME) eine zweiseitige Block-Anpassung (Fig. 11) durchgeführt wird.

12. Verfahren nach einem der Ansprüche 1 bis 11, bei dem bei der Bewegungsabschätzung (ME) eine periodische Struktur-Feststellung durchgeführt wird, die dazu dient, die Bewegungs-Vektoren (MBMV) zu korrigieren.

13. Verfahren nach einem der Ansprüche 1 bis 12, bei dem bei der Bewegungsabschätzung (ME) eine oder beide Komponenten (MVH, MVV) der Bewegungs-Vektoren (MBMV) in Abhängigkeit von einem berechneten Rauschpegel (N) gegen null gezwungen werden.

14. Verfahren nach einem der Ansprüche 5 bis 13, bei dem eine horizontale oder vertikale Median-Filterung von einer oder beiden Komponenten (SBMVH, SBMVV) der Unterblock-Bewegungs-Vektoren (SBMV) durchgeführt wird.

15. Verfahren nach einem der Ansprüche 5 bis 14, bei dem für Unterblock-Bewegungs-Vektoren (SBMV) eine Konfidenz (CL) aus einem Unterblock-Fehler (SE) berechnet wird und bei dem für die Anwendung auf Chrominanz zusätzlich eine Chrominanz-Konfidenz (CC) in Abhängigkeit von der Konfidenz (CL) berechnet wird.

16. Verfahren nach Anspruch 15, bei dem die räumliche (SF) und/oder die zeitliche (TF) Rauschverminderung durch die Konfidenz (CL) bzw. die Chrominanz-Konfidenz (CC) gesteuert wird.

17. Verfahren nach einem der Ansprüche 1 bis 16, bei dem die räumliche Rauschverminderung (SF) von Anspruch 1 oder 2 ausgeführt wird und ein Richtungs-Filter, z.B. ein Median-Filter einschließt.

18. Verfahren nach einem der Ansprüche 1 bis 17, bei dem die zeitliche Rauschverminderung (TF) einen Prediktor (PRED) für die Bewegungskompensation von entsprechenden Pixeln aus dem vorhergehenden Halbbild (z-1) enthält.

19. Verfahren nach Anspruch 18, bei dem die rekursive zeitliche Rauschverminderung (TF) von Anspruch 1 oder 2 ausgeführt wird und eine nicht-lineare Kombination von Pixeln aus dem räumlich rauschverminderten Halbbild (z, CUF) und dem räumlich und/oder zeitlich rauschverminderten und bewegungskompensierten letzten Quellen-Halbbild (z-1, PPRF) ausführt, das aus dem Prediktor (PRED) herauskommt.

20. Verfahren nach einem der Ansprüche 8 bis 19, bei dem aus den Block-Anpassungs-Fehlern, die von der Bewegungsabschätzung (ME) herrühren, ein Hauptblock-Null-Vektor berechnet wird, der steuert, welches von wenigstens zwei verschiedenen Interpolations-Filtertypen verwendet wird, um das dritte Ausgangs-Halbbild (OF3) aufzubauen, wobei einer dieser Filtertypen eine zeitliche Komponente enthält.

21. Verfahren nach einem der Ansprüche 15 bis 20, bei dem zum Aufbau des zweiten (OF2)- und des vierten (OF4)-Ausgangs-Halbbildes, gesteuert durch die Konfidenz (CL) bzw. die Chrominanz-Konfidenz (CC), eine Kombination von:

   - entweder vertikal-zeitlich interpolierten oder vertikal interpolierten Pixeln für beide, das zweite (OF2)- und das vierte (OF4)-Ausgangs-Halbbild;
   - Fallback-Pixeln

   Verwendet wird, wobei in beiden Fällen die Fallback-Pixel ohne Bewegungskompensation verwendet werden.

22. Verfahren nach einem der Ansprüche 18 bis 21, bei dem der Prediktor (PRED) Chrominanz-Pixel (CH) verwendet, die horizontal mit einem Faktor vier in bezug auf die Luminanz-Pixel (O) unterabgetastet werden.

23. Verfahren nach Anspruch 21 und 22, bei dem zum Aufbau des zweiten (CF2)- und des vierten (OF4)-Chrominanz-Ausgangs-Halbbildes, gesteuert durch die Konfidenz (CL) bzw. die Chrominanz-Konfidenz (CC), eine Kombination von

   - nur vertikal interpolierten Pixeln für beide, das zweite (OF2)- und das vierte (OF4)-Ausgangs-Halbbild;
   - Fallback-Pixeln verwendet wird, wobei die Fallback-Pixel ohne Bewegungskompensation verwendet werden.

24. Verfahren nach einem der Ansprüche 1 bis 23, bei dem die bewegungskompensierte Interpolation (MCI) eine vertikale (VPER) und/oder horizontale (HPER) Spitzenwertbildung und/oder sin(x)/x-Korrektur (SIXC) wenigstens für Luminanz enthält.

25. Verfahren nach einem der Ansprüche 13 bis 24, bei dem die vertikale (VPEA)- und/oder horizontale (HPEA)-Spitzenwertbildung eine Entkernungsfunktion (COR1, COR2) enthält, die von dem berechneten Rauschpegel (N) abhängt.

26. Verfahren nach einem der Ansprüche 19 bis 25, bei dem die Funktion (f(x)) zur Durchführung der nicht-linearen Kombi nation ihre maximale Größe (M) für einen Eingangswert hat, dessen Größe größer als null und kleiner als die maximal mögliche Größe des Eingangswertes ist.

27. Verfahren nach Anspruch 26, bei dem die Funktion (f(x)) ihre maximale Größe (M) bei einem Eingangswert hat, der im Prinzip den doppelten Wert der Normabweichung (σ) einer Rauschabschätzung (N) hat, die in dem bewegungskompensier ten Prozeß zur Erhöhung der Bildfrequenz berechnet wird.

28. Verfahren nach Anspruch 26 oder 27, bei dem die Funktion (f(x)) mit einem maximalen Maßstab ausgeführt wird.

29. Vorrichtung für die bewegungskompensierte Erhöhung der Bilfrequenz von Zeilensprung-Videosignalen zur Durchführung des Verfahrens nach einem der Ansprüche 1 bis 28, umfassend:

- erste Speichermittel (SPUFM), die für die Umwandlung von Quellen-Halbbildern (I) in Halbbilder mit der doppelten Halbbildfrequenz verwendet werden;
- nachfolgende zweite Speichermittel (FM1), deren Eingang und Ausgang mit einem Bewegungsabschätzer (ME) verbunden ist, der eine Bewegungsabschätzung von Halbbild zu Halbbild durchführt;
- dritte Speichermittel (FM2), deren Eingang und Ausgang mit einem bewegungskompensierten Interpolator (MCI) verbunden ist, der eine Bewegungskompensation von Halbbild zu Halbbild durchführt, und der Bewegungsinformationen von dem Bewegungsabschätzer empfängt, und der die bewegungskompensierten in der Bildfrequenz erhöhten Ausgangssignale (O) liefert;
- räumliche Rauschverminderungsmittel (SF) und/oder nachfolgende zeitliche Rauschverminderungsmittel (TF), wobei das Eingangssignal der räumlichen Rauschverminderungsmittel bzw. der zeitlichen Rauschverminderungsmittel von dem Eingangssignal der zweiten Speichermittel (FM1) abgeleitet wird und das endgültige Ausgangssignal der Rauschverminderungsmittel dem Eingang der dritten Speichermittel (FM2) zugeführt wird.

30. Vorrichtung für die bewegungskompensierte Erhöhung der Bildfrequenz von Zeilensprung-Videosignalen zur Durchführung des Verfahrens nach einem der Ansprüche 1 bis 28, umfassend:

- erste Speichermittel (SBUFM), die zur Umwandlung von Quellen-Halbbildern (I) in Halbbilder mit der doppelten Halbbildfrequenz verwendet werden;
- nachfolgende zweite Speichermittel (FM), deren Eingangssignal von dem Ausgangssignal der ersten Speichermittel abgeleitet und dem ersten Eingang eines bewegungskompensierten Interpolators (MCI) zugeführt wird, der eine Bewegungskompensation von Halbbild zu Halbbild durchführt, und der Bewegungsinformationen von einem Bewegungsabschätzer (ME) empfängt, und der die bewegungskompensierten, in der Bildfrequenz erhöhten Ausgangssignale (O) liefert, wobei das Signal an dem zweiten Eingang des bewegungskompensierten Interpolators von dem Ausgangssignal der zweiten Speichermittel abgeleitet wird;
- wobei der Bewegungsabschätzer (E), das Ausgangssignal der zweiten Speichermittel an seinem zweiten Eingang empfängt, und die Bewegungsabschätzung von Halbbild zu Halbbild durchführt, wobei das Signal am ersten Eingang dieses Bewegungsabschätzers von dem Ausgangssignal der ersten Speichermittel abgeleitet wird;
- räumliche Rauschverminderungsmittel (SF) und/oder anschließende zeitliche Rauschverminderungsmittel (TF), wobei das Eingangssignal der räumlichen Rauschverminderungsmittel bzw. der zeitlichen Rauschverminderungsmittel von dem Ausgang der ersten Speichermittel abgeleitet wird und der endgültige Ausgang der Rauschverminderungsmittel dem Eingang der zweiten Speichermittel und dem ersten Eingang des bewegungskompensierten Interpolators zugeführt wird.

31. Vorrichtung nach einem der Ansprüche 29 oder 30, bei der die zeitlichen Rauschverminderungsmittel (TF) vorhanden sind und aus einer rekursiven zeitlichen Rauschverminderung bestehen.

32. Vorrichtung nach einem der Ansprüche 29 bis 31, bei der die Bewegungsinformationen Bewegungs-Vektoren (MBMV) für Hauptblöcke (MB) enthalten, während die bewegungskompen sierte Interpolation (MCI) für Unterblöcke (SB) ausgeführt wird, die kleiner als die Hauptblöcke sind.

33. Vorrichtung nach Anspruch 32, bei der zur Durchführung der bewegungskompensierten Interpolation (MCI) Unterblock-Bewegungs-Vektoren (SBMV) aus den Hauptblock-Bewegungs-Vektoren (MBMV) berechnet werden, indem für jeden Ausgangs-Unterblock-Vektor ein Vektor aus den Hauptblock-Bewegungs-Vektoren der drei Hauptblöcke (A, B; B, E; E, B; D, A) ausgewählt wird, der dem gegenwärtigen Unterblock einschließlich des gegenwärtigen Hauptblocks (C) am nächsten liegt.

34. Vorrichtung nach einem der Ansprüche 29 bis 33, bei der die räumlichen Rauschverminderungsmittel (SF) der Ansprüche 29 oder 30 vorhanden sind und nur bei der Luminanz arbeiten, und wobei die zeitlichen Rauschverminderungsmittel (TF) der Ansprüche 29 oder 30 vorhanden sind und bei der Luminanz und/oder der Chrominanz arbeiten.

35. Vorrichtung nach einem der Ansprüche 29 bis 34, bei der die bewegungskompensierte Interpolation (MCI) für Luminanz und Chrominanz durchgeführt wird.

36. Vorrichtung nach einem der Ansprüche 31 bis 35, bei der die rekursiven zeitlichen Rauschverminderungsmittel (TF) der Ansprüche 39 oder 30 vorhanden sind und eine nicht-lineare Kombination (ADD) von Pixeln aus dem räumlich rauschverminderten gegenwärtigen Halbbild (z, CUF) und dem räumlich und/oder zeitlich rauschverminderten und bewegungskompensierten letzten Quellen-Halbbild (z-1, PPRF) ausführen, das aus dem Prediktor (PRED) herauskommt, und wobei eine Funktion (f(x)), die in einer ersten Nachschlagtabelle (LUT2) gespeichert ist, um die nicht-lineare Kombination durchzuführen, ihre maximale Größe (M) für einen Eingangswert hat, dessen Größe größer als null und kleiner als die maximal mögliche Größe des Eingangswertes ist.

37. Vorrichtung nach Anspruch 36, bei der die Funktion (f(x)) mit einem maximalen Maßstab unter Verwendung einer weite ren Nachschlagtabelle (LUT1) ausgeführt wird, um die Ein gangswerte der ersten Nachschlagtabelle (LUT2) zu erzeugen.

## Revendications

1. Méthode pour la conversion vers le haut compensée en mouvement de signaux vidéo entrelacés, comportant les étapes suivantes :

   - conversion de demi-images de source (I) en demi-images de fréquence de demi-images doublée en utilisant un premier moyen de mémoire (SPUFM) ;
   - estimation de mouvement (ME) en utilisant l'entrée et la sortie d'un deuxième moyen de mémoire (FM1) suivant ledit premier moyen de mémoire,

     caractérisée par :

   - l'exécution d'une interpolation compensée en mouvement (MCI) sur lesdites demi-images de fréquence de demi-images doublée en utilisant l'entrée et la sortie d'un troisième moyen de mémoire (FM2) et en utilisant des informations de mouvement (MV) provenant de ladite estimation de mouvement (ME), fournissant ainsi les signaux de sortie convertis vers le haut compensés en mouvement (O) ;
   - une réduction de bruit spatiale (SF) et/ou une réduction de bruit temporelle suivante (TF), dans laquelle le signal d'entrée pour ladite réduction de bruit spatiale ou la dite réduction de bruit temporelle, respectivement, est dérivé du signal d'entrée dudit deuxième moyen de mémoire (FM1) et le signal de sortie final de la réduction de bruit est passé à l'entrée dudit troisième moyen de mémoire (FM2).

2. Méthode pour la conversion vers le haut compensée en mouvement de signaux vidéo entrelacés, comportant les étapes suivantes :

   - conversion de demi-images de source (I) en demi-images de fréquence de demi-images doublée en utilisant un premier moyen de mémoire (SPUFM) ;
   - exécution d'une interpolation compensée en mouvement (MCI) sur lesdites demi-images de fréquence de demi-images doublée en utilisant l'entrée et la sortie d'un deuxième moyen de mémoire (FM) et en utilisant des informations de mouvement (MV), fournissant ainsi les signaux de sortie convertis vers le haut compensés en mouvement (O), dans laquelle le signal d'entrée dudit deuxième moyen de mémoire (FM) est dérivé du signal de sortie dudit premier moyen de mémoire (SPUFM),

     caractérisée par :

   - une estimation de mouvement (ME) du premier signal d'entrée qui est dérivé de la sortie dudit premier moyen de mémoire (SPUFM) et du deuxième signal d'entrée qui est dérivé de la sortie dudit deuxième moyen de mémoire (FM), dans laquelle ladite estimation de mouvement fournit lesdites informations de mouvement (MV) ;
   - une réduction de bruit spatiale (SF) et/ou une réduction de bruit temporelle suivante (TF), par laquelle le signal d'entrée pour ladite réduction de bruit spatiale ou ladite réduction de bruit temporelle, respectivement, est dérivé de la sortie dudit premier moyen de mémoire (SPUFM) et le signal de sortie final de la réduction de bruit est passé à l'entrée dudit deuxième moyen de mémoire (FM) et à la première entrée pour ladite interpolation compensée en mouvement.

3. Méthode selon la revendication 1 ou 2, dans laquelle la réduction de bruit temporelle (TF) est présente et est une réduction de bruit temporelle récursive.

4. Méthode selon l'une quelconque des revendications 1 à 3, dans laquelle lesdites informations de mouvement comportent des vecteurs de mouvement (MBMV) de blocs principaux (MB) tandis que ladite interpolation compensée en mouvement (MCI) est effectuée pour des sous-blocs (SB) plus petits que lesdits blocs principaux.

5. Méthode selon la revendication 4, dans laquelle pour exécuter ladite interpolation compensée en mouvement (MCI), les vecteurs de mouvement de sous-blocs (SBMV) sont calculés à partir desdits vecteurs de mouvement de blocs principaux (MBMV) en sélectionnant pour chaque vecteur de sous-bloc de sortie un vecteur à partir des vecteurs de mouvement de blocs principaux des trois blocs principaux (A, B ; B, E ; E, D ; D, A) situé le plus près du sous-bloc en cours comportant le bloc principal en cours (C).

6. Méthode selon l'une quelconque des revendications 1 à 5, dans laquelle la réduction de bruit spatiale (SF) de la revendication 1 ou 2 est effectuée sur la luminance uniquement et dans laquelle la réduction de bruit temporelle (TF) de la revendication 1 ou 2 est effectuée sur la luminance et/ou la chrominance.

7. Méthode selon l'une quelconque des revendications 1 à 6, dans laquelle ladite interpolation compensée en mouvement (MCI) est effectuée pour la luminance et la chrominance.

8. Méthode selon l'une quelconque des revendications 1 à 7, dans laquelle dans ladite interpolation compensée en mouvement (MCI) pour chaque paire de demi-images de source quatre demi-images de sortie (OF1, OF2, OF3, OF4) sont générées par laquelle:

   - la première demi-image de sortie (OF1) est dérivée de la première demi-image de source de la paire en cours ;
   - la deuxième demi-image de sortie (OF2) est une combinaison des première et deuxième demi-images de source de la paire en cours ;
   - les troisième (OF3) et quatrième (OF4) demi-images de sortie sont une combinaison de la deuxième demi-image de source de la paire en cours et de la première demi-image de source de la paire suivante.

9. Méthode selon l'une quelconque des revendications 1 à 8, dans laquelle dans ladite estimation de mouvement (ME) une conversion proscan (figure 8) est utilisée sur une demi-image de source sur deux.

10. Méthode selon la revendication 9, dans laquelle dans ladite estimation de mouvement (ME) ladite conversion proscan est basée sur une grille d'éléments d'image sous-échantillonnée horizontalement.

11. Méthode selon l'une quelconque des revendications 1 à 10, dans laquelle dans ladite estimation de mouvement (ME) une correspondance de blocs bilatérale (figure 11) est exécutée.

12. Méthode selon l'une quelconque des revendications 1 à 11, dans laquelle dans ladite estimation de mouvement (ME) une détection de structure périodique qui est utilisée pour corriger lesdits vecteurs de mouvement (MBMV) est exécutée.

13. Méthode selon l'une quelconque des revendications 1 à 12, dans laquelle dans ladite estimation de mouvement (ME) une ou les deux composantes (MVH, MVV) desdits vecteurs de mouvement (MBMV) sont forcées vers zéro en fonction d'un niveau de bruit calculé (N).

14. Méthode selon l'une quelconque des revendications 5 à 13, dans laquelle un filtrage moyen horizontal ou vertical est exécuté sur une ou les deux composantes (SBMVH, SBMVV) desdits vecteurs de mouvement de sous-blocs (SBMV).

15. Méthode selon l'une quelconque des revendications 5 à 14, dans laquelle pour les vecteurs de mouvement de sous-blocs (SBMV) une confiance (CL) est calculée à partir d'une erreur de sous-bloc (SE) et pour la chrominance une confiance de chrominance (CC) fonction de ladite confiance (CL) peut être de plus calculée.

**16.** Méthode selon la revendication 15, dans laquelle ladite réduction de bruit spatiale (SF) et/ou temporelle (TF) est commandée par lesdites confiance (CL) et confiance de chrominance (CC), respectivement.

**17.** Méthode selon l'une quelconque des revendications 1 à 16, dans laquelle la réduction de bruit spatiale (SF) de la revendication 1 ou 2 est effectuée et comporte un filtre directif, p. ex. un filtre moyen.

**18.** Méthode selon l'une quelconque des revendications 1 à 17, dans laquelle ladite réduction de bruit temporelle (TF) comporte un prédicteur (PRED) pour la compensation en mouvement d'éléments d'image respectifs de la demi-image précédente (z-1).

**19.** Méthode selon la revendication 18, dans laquelle la réduction de bruit temporelle récursive (TF) de la revendication 1 ou 2 est exécutée et effectue une combinaison non linéaire d'éléments d'image à partir de la demi-image en cours à bruit réduit spatialement (z, CUF) et de la dernière demi-image de source à bruit réduit spatialement et/ou temporellement et compensée en mouvement (z-1, PPRF) provenant dudit prédicteur (PRED).

**20.** Méthode selon l'une quelconque des revendications 8 à 19, dans laquelle à partir des erreurs de correspondance de blocs résultant de ladite estimation de mouvement (ME) un vecteur nul de bloc principal est calculé, lequel commande celui d'au moins deux types de filtre d'interpolation différents qui est utilisé pour construire la troisième demi-image de sortie (OF3), dans laquelle un de ces types de filtres comporte une composante temporelle.

**21.** Méthode selon l'une quelconque des revendications 15 à 20, dans laquelle pour construire la deuxième (OF2) et la quatrième (OF4) demi-image de sortie, commandée par lesdites confiance (CL) et confiance de chrominance (CC), respectivement, une combinaison :

- d'éléments d'image interpolés soit verticalement-temporellement, soit verticalement pour les deux, la deuxième (OF2) et la quatrième (OF4) demi-image de sortie ;
- d'éléments d'image de secours

est utilisée, dans laquelle dans les deux cas les éléments d'image de secours sont utilisés sans compensation de mouvement.

**22.** Méthode selon l'une quelconque des revendications 18 à 21, dans laquelle ledit prédicteur (PRED) utilise des éléments d'image de chrominance (CH) qui sont sous-échantillonnés horizontalement par un facteur de quatre par rapport aux éléments d'image de luminance (O).

**23.** Méthode selon la revendication 21 ou 22, dans laquelle pour construire la deuxième (OF2) et la quatrième (OF4) demi-image de sortie de chrominance, commandée par lesdites confiance (CL) et confiance de chrominance (CC), respectivement, une combinaison :

- d'éléments d'image interpolés verticalement uniquement pour les deux, la deuxième (OF2) et la quatrième (OF4) demi-image de sortie ;
- d'éléments d'image de secours, est utilisée, dans laquelle les éléments d'image de secours sont utilisés sans compensation de mouvement.

**24.** Méthode selon l'une quelconque des revendications 1 à 23, dans laquelle ladite interpolation compensée en mouvement (MCI) comporte une formation de pics verticaux (VPEA) et/ou horizontaux (HPEA) et/ou une correction sin(x)/x (SIXC) au moins pour la luminance.

**25.** Méthode selon l'une quelconque des revendications 13 à 24, dans laquelle ladite formation de pics verticaux (VPEA) et/ou horizontaux (HPEA) comporte une fonction de suppression (COR1, COR2) qui dépend dudit niveau de bruit calculé (N).

**26.** Méthode selon l'une quelconque des revendications 19 à 25, dans laquelle la fonction (f(x)) pour exécuter ladite combinaison non linéaire a sa quantité maximum (M) pour une valeur d'entrée dont la quantité est supérieure à zéro et inférieure à la quantité maximum possible de ladite valeur d'entrée.

**27.** Méthode selon la revendication 26, dans laquelle ladite fonction (f(x)) a sa quantité maximum (M) pour une valeur d'entrée qui est en principe le double de la valeur de l'écart type ($\sigma$) d'une estimation de bruit (N) qui est calculée dans le processus de conversion vers le haut compensé en mouvement.

28. Méthode selon la revendication 26 ou 27, dans laquelle la fonction (f(x)) est mise en oeuvre avec une échelle maximum.

29. Appareil pour la conversion vers le haut compensée en mouvement de signaux vidéo entrelacés, pour effectuer une méthode selon l'une quelconque des revendications 1 à 28 et comportant :

- un premier moyen de mémoire (SPUFM) pour convertir des demi-images de source (I) en demi-images de fréquence de demi-images doublée ;
- un deuxième moyen de mémoire (FM1) suivant, dont l'entrée et la sortie sont connectées à un estimateur de mouvement (ME) qui exécute une estimation de mouvement de demi-image en demi-image ;
- un troisième moyen de mémoire (FM2) dont l'entrée et la sortie sont connectées à un interpolateur compensé en mouvement (MCI) qui exécute une compensation en mouvement de demi-image en demi-image et qui reçoit des informations de mouvement provenant dudit estimateur de mouvement et qui fournit les signaux de sortie convertis vers le haut compensés en mouvement (O) ;
- un moyen de réduction de bruit spatiale (SF) et/ou un moyen de réduction de bruit temporelle suivante (TF), dans lequel le signal d'entrée dudit moyen de réduction de bruit spatiale ou dudit moyen de réduction de bruit temporelle, respectivement, est dérivé du signal d'entrée dudit deuxième moyen de mémoire (FM1) et le signal de sortie final du moyen de réduction de bruit est passé à l'entrée dudit troisième moyen de mémoire (FM2).

30. Appareil pour la conversion vers le haut compensée en mouvement de signaux vidéo entrelacés, pour effectuer une méthode selon l'une quelconque des revendications 1 à 28, et comportant :

- un premier moyen de mémoire (SPUFM) utilisé pour convertir des demi-images de source (I) en demi-images de fréquence de demi-images doublée ;
- un deuxième moyen de mémoire suivant (FM) dont le signal d'entrée est dérivé du signal de sortie dudit premier moyen de mémoire et est passé à la première entrée d'un interpolateur compensé en mouvement (MCI) qui exécute une compensation en mouvement de demi-image en demi-image et qui reçoit des informations de mouvement provenant d'un estimateur de mouvement (ME) et qui fournit les signaux de sortis convertis vers le haut compensés en mouvement (O), dans lequel le signal au niveau de la deuxième entrée dudit interpolateur compensé en mouvement est dérivé du signal de sortie dudit deuxième moyen de mémoire ;
- ledit estimateur de mouvement (ME) qui reçoit le signal de sortie dudit deuxième moyen de mémoire au niveau de sa deuxième entrée et qui exécute une estimation de mouvement de demi-image en demi-image, par lequel le signal au niveau de la première entrée de cet estimateur de mouvement est dérivé du signal de sortie dudit premier moyen de mémoire ;
- un moyen de réduction de bruit spatiale (SF) et/ou un moyen de réduction de bruit temporelle suivant (TF), par lequel le signal d'entrée dudit moyen de réduction de bruit spatiale ou dudit moyen de réduction de bruit temporelle, respectivement, est dérivé de la sortie dudit premier moyen de mémoire et la sortie finale du moyen de réduction de bruit est passée à l'entrée dudit deuxième moyen de mémoire et à la première entrée dudit interpolateur compensé en mouvement.

31. Appareil selon la revendication 29 ou 30, dans lequel le moyen de réduction de bruit temporelle (TF) est présent et est une réduction de bruit temporelle récursive.

32. Appareil selon l'une quelconque des revendications 29 à 31, dans lequel lesdites informations de mouvement comportent des vecteurs de mouvement (MBMV) de blocs principaux (MB) tandis que ladite interpolation compensée en mouvement (MCI) est effectuée pour des sous-blocs (SB) plus petits que lesdits blocs principaux.

33. Appareil selon la revendication 32, dans lequel pour exécuter ladite interpolation compensée en mouvement (MCI), les vecteurs de mouvement de sous-blocs (SBMV) sont calculés à partir desdits vecteurs de mouvement de blocs principaux (MBMV) en sélectionnant pour chaque vecteur de sous-bloc de sortie un vecteur à partir des vecteurs de mouvement de blocs principaux des trois blocs principaux (A, B ; B, E ; E, D ; D, A) situé le plus près du sous-bloc en cours comportant le bloc principal en cours (C).

34. Appareil selon l'une quelconque des revendications 29 à 33, dans lequel le moyen de réduction de bruit spatiale (SF) de la revendication 29 ou 30 est présent et fonctionne sur la luminance uniquement et dans lequel le moyen de réduction de bruit temporelle (TF) de la revendication 29 ou 30 est présent et fonctionne sur la luminance et/ou la chrominance.

35. Appareil selon l'une quelconque des revendications 29 à 24, dans lequel ladite interpolation compensée en mouvement (MCI) est effectuée pour la luminance et la chrominance.

36. Appareil selon l'une quelconque des revendications 31 à 35, dans lequel le moyen de réduction de bruit temporelle récursive (TF) de la revendication 29 ou 30 est présent et exécute une combinaison non linéaire (ADD) d'éléments d'image à partir de la demi-image en cours à bruit réduit spatialement (z, CUF) et de la dernière demi-image de source à bruit réduit spatialement et/ou temporellement et compensée en mouvement (z-1, PPRF) sortant dudit prédicteur (PRED) et dans lequel une fonction (f(x)) stockée dans une première table de consultation (LUT2) pour l'exécution de ladite combinaison non linéaire a sa quantité maximum (M) pour une valeur d'entrée dont la quantité est supérieure à zéro et inférieure à la quantité maximum possible de ladite valeur d'entrée.

37. Appareil selon la revendication 36, dans lequel ladite fonction (f(x)) est mise en oeuvre avec une échelle maximum en utilisant une autre table de consultation (LUT1) pour générer les valeurs d'entrée de ladite première table de consultation (LUT2).

Fig.1

Fig.2

Fig.3A

Fig.3B

**Fig.4**

Fig.5

Fig.6

**Fig.7**

**Fig.8**

**Fig.9**

H

V

**Fig.10**

SB          MB

PF
( z - 1 )

CF
( z )

MV

SWW          MB          SWW

**Fig.11**

MVV

z -1    z

+2    -2

0

**A**

MVH

-16   -12   -8   -4   0   +4   +8   +12

z

z -1

-14   -10   -6   -2   +2   +6   +10   +14

z

z -1

**B**          **Fig.12**

22 MBs

5 MBs    8 MBs    5 MBs

36 MBs (B, G)

(M)

32 MBs

8 MBs

12 MBs

8 MBs

PNL1

PNL2

PNL3

ZON

PNLO

ACP

**Fig.13**

MVH= -16      MVH= -8      MVH= 0      MVH= +8

(z)

(z-1)

**Fig.14**

A      B      C      D

MVUP      UPB

LEB

1

+2
0
-2

MVV

MVLE

-16 -12 -8 -4 0 +4 +8 +12
-14 -10 -6 -2 +2 +6 +10 +14

CUB

MVH

CERR

■ = MBE

▨ = MRE

**2** = 2 MRE

**1** = MINRE = MINBE

▨▨▨ = CHR

**Fig.15**

35

**Fig.16**

OSF

B

B

B

B

VMBB  W

W

W

OIF    ESF

B  →  B

B  →  B

B  →  B

G  →  B

W    W

W    W

**Fig.17**

A

B    C    D

E

**Fig.18**

( z-1 )         ( z )

d1

d3  d2

d4

SB

**Fig.19**

N        TNRS  N        SBMV

ISPU    SNR                TNR

TF

(z)                PRED

FM

(z-1)

(z)

SBMV

N

CC

CL

TNRS

ME        MBZV        MCI

O

36

**Fig.20**

**Fig.21**

**Fig.22**

N
11
LUT 1

4.3    1.000

0 / 1 ← I 2 CR

SF    SWC

**Fig.23**

| N | 0..4 | 5 | 6 | 7 | 8 | 9 | 10 | 11,12 |
|---|---|---|---|---|---|---|---|---|
| SF | 8.000 | 7.000 | 6.000 | 5.000 | 4.500 | 4.000 | 3.500 | 3.125 |
| N | 13 | 14,15 | 16,17 | 18,19 | 20..22 | 23..27 | 28..35 | ≥36 |
| SF | 2.750 | 2.500 | 2.250 | 2.000 | 1.750 | 1.500 | 1.250 | 1.000 |

**Fig.24**

| Ly | 0..17 | 18,19 | 20,21 | 22,23 | 24,25 |
|---|---|---|---|---|---|
| Lz | 48 | 47 | 46 | 45 | 44 |
| Ly | 26,27 | 28,29 | 30,31 | 32,33 | 34,35 |
| Lz | 43 | 42 | 41 | 40 | 39 |
| Ly | 36,37 | 38,39 | 40,41 | 42,43 | 44,45 |
| Lz | 38 | 37 | 36 | 35 | 34 |
| Ly | 46,47 | 48..50 | 51,52 | 53,54 | 55,56 |
| Lz | 33 | 32 | 31 | 30 | 29 |
| Ly | 57..59 | 60,61 | 62..64 | 65,66 | 67..69 |
| Lz | 28 | 27 | 26 | 25 | 24 |
| Ly | 70..72 | 73,74 | 75..77 | 78..80 | 81..83 |
| Lz | 23 | 22 | 21 | 20 | 19 |
| Ly | 84..86 | 87..89 | 90..92 | 93..95 | 96..99 |
| Lz | 18 | 17 | 16 | 15 | 14 |
| Ly | 100..102 | 103..106 | 107..110 | 111..114 | 115..118 |
| Lz | 13 | 12 | 11 | 10 | 9 |
| Ly | 119..122 | 123..127 | 128..132 | 133..138 | 139..144 |
| Lz | 8 | 7 | 6 | 5 | 4 |
| Ly | 145..152 | 153..161 | 162..174 | ≥175 | |
| Lz | 3 | 2 | 1 | 0 | |

**Fig.25**

**Fig.26**

**Fig.27** OF3 SNRF

**Fig.28**

**Fig.29**

MVV=+2

F1　F3　F1'
× OF2 ○　×
○ □ × ○　×
× ○ × ○　×
f ○ □ × ○　×
× ○ □ × ○ g
i × □ ○ gh ×
○ □ × h ×
× ○ × ○　×

**A**

MVH=+4

L n+1
F3 ○ ○ ○ ○ ○ ○ ○ ○ ○ ○ ○ ○ ○ ○
　 CI　CH　CI　CH　CI　CH　CI

OL n
F2 □ □ □ □ □ □ □ □ □ □ □ □ □ □
　 CO　CO　CO　CO　CO　CO　CO

L n-1
F1 × × × × × × × × × × × × × × ×
　 CI　CH　CI　CH　CI　CH　CI
　　　　　　　 f

**B**

**Fig.30**

MVV=0

F1　F3　F5
× ○ OF4 ×
× □ ○
× ○ □ ×
× ○ □ ○
× ○ □ × j
i × □ jk ×
× ○ × k
× ○ □ ○
× ○ ×

**A**

MVH=-8
　　　　 j/k
L n
F5 ○ ○ ○ ○ ○ ○ ○ ○ ○ ○ ○ ○ ○ ○
　 CI　CH　CI　CH　CI　CH　CI

OL n
F4 □ □ □ □ □ □ □ □ □ □ □ □ □ □
　 CO　CO　CO　CO　CO　CO　CO

L n
F3 × × × × × × × × × × × × × × ×
　 CI　CH　CI　CH　CI　CH　CI
　　　　　　　　　　 i

**B**

**Fig.31**

SSW　　　　OOFP　　　SWF

0　　8:0　ADD　7:0

7:0
MCP
　　SUB　MIN　　MAX
7:0　8:0　min　　max　8:0
FBP

7:0
CL　　　*(-1)

LIM 3　7:0

OUP
OF

2CO

**Fig.32**

**Fig.33**

Y

Y=X-2*N(z-1)

-2*N(z-1)

2*N(z-1)

X

Y=X+2*N(z-1)

**Fig.34**

**Fig.35**

**Fig.36**

| LN | N | SF | SNR$_\sigma$ | $\sigma$ |
|----|------|-------|-------|------|
| 15 | $\geq 32$ | 1.000 | 16.90 | 32.0 |
| 14 | 26 - 31 | 1.250 | 18.84 | 25.6 |
| 13 | 22 - 25 | 1.500 | 20.42 | 21.3 |
| 12 | 19 - 21 | 1.750 | 21.76 | 18.3 |
| 11 | 17 - 18 | 2.000 | 22.92 | 16.0 |
| 10 | 15 - 16 | 2.250 | 23.94 | 14.2 |
| 9 | 13 - 14 | 2.500 | 24.86 | 12.8 |
| 7 | 10 | 3.125 | 26.79 | 10.2 |
| 6 | 9 | 3.500 | 27.78 | 9.1 |
| 5 | 8 | 4.000 | 28.94 | 8.0 |
| 4 | 7 | 4.500 | 29.96 | 7.1 |
| 3 | 6 | 5.000 | 30.88 | 6.4 |
| 2 | 5 | 6.000 | 32.46 | 5.3 |
| 1 | 4 | 7.000 | 33.80 | 4.6 |
| 0 | 0 - 3 | 8.000 | 34.96 | 4.0 |

**Fig.39**

EP 0 735 747 B1

**Fig.38**

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 0 | 1 | 2 | 2 | 3 | 4 | 5 | 5 | 6 | 7 | 8 | 8 | 9 | ,10 | 11 | 11 |

| 16 | 17 | 18 | 19 | 20 | 21 | 22 | 23 | 24 | 25 | 26 | 27 | 28 | 29 | 30 | 31 |
|----|----|----|----|----|----|----|----|----|----|----|----|----|----|----|----|
| 12 | 13 | 13 | 14 | 14 | 15 | 16 | 16 | 17 | 17 | 17 | 18 | 18 | 19 | 19 | 20 |

| 32 | 33 | 34 | 35 | 36 | 37 | 38 | 39 | 40 | 41 | 42 | 43 | 44 | 45 | 46 | 47 |
|----|----|----|----|----|----|----|----|----|----|----|----|----|----|----|----|
| 20 | 20 | 21 | 21 | 21 | 22 | 22 | 22 | 23 | 23 | 23 | 23 | 24 | 24 | 24 | 24 |

| 48 | 49 | 50 | 51 | 52 | 53 | 54 | 55 | 56 | 57 | 58 | 59 | 60 | 61 | 62 | 63 |
|----|----|----|----|----|----|----|----|----|----|----|----|----|----|----|----|
| 24 | 24 | 25 | 25 | 25 | 25 | 25 | 25 | 25 | 25 | 25 | 25 | 26 | 26 | 26 | 26 |

| 64 | 65 | 66 | 67 | 68 | 69 | 70 | 71 | 72 | 73 | 74 | 75 | 76 | 77 | 78 | 79 |
|----|----|----|----|----|----|----|----|----|----|----|----|----|----|----|----|
| 26 | 26 | 26 | 26 | 26 | 25 | 25 | 25 | 25 | 25 | 25 | 25 | 25 | 25 | 25 | 25 |

| 80 | 81 | 82 | 83 | 84 | 85 | 86 | 87 | 88 | 89 | 90 | 91 | 92 | 93 | 94 | 95 |
|----|----|----|----|----|----|----|----|----|----|----|----|----|----|----|----|
| 25 | 24 | 24 | 24 | 24 | 24 | 24 | 23 | 23 | 23 | 23 | 23 | 22 | 22 | 22 | 22 |

| 96 | 97 | 98 | 99 | 100 | 101 | 102 | 103 | 104 | 105 | 106 | 107 | 108 | 109 | 110 | 111 |
|----|----|----|----|-----|-----|-----|-----|-----|-----|-----|-----|-----|-----|-----|-----|
| 22 | 21 | 21 | 21 | 21 | 20 | 20 | 20 | 20 | 19 | 19 | 19 | 19 | 18 | 18 | 18 |

| 112 | 113 | 114 | 115 | 116 | 117 | 118 | 119 | 120 | 121 | 122 | 123 | 124 | 125 | 126 | 127 |
|-----|-----|-----|-----|-----|-----|-----|-----|-----|-----|-----|-----|-----|-----|-----|-----|
| 18 | 17 | 17 | 17 | 16 | 16 | 16 | 15 | 15 | 15 | 15 | 14 | 14 | 14 | 13 | 13 |

| 128 | 129 | 130 | 131 | 132 | 133 | 134 | 135 | 136 | 137 | 138 | 139 | 140 | 141 | 142 | 143 |
|-----|-----|-----|-----|-----|-----|-----|-----|-----|-----|-----|-----|-----|-----|-----|-----|
| 13 | 13 | 12 | 12 | 12 | 11 | 11 | 11 | 10 | 10 | 10 | 10 | 9 | 9 | 9 | 8 |

| 144 | 145 | 146 | 147 | 148 | 149 | 150 | 151 | 152 | 153 | 154 | 155 | 156 | 157 | 158 | 159 |
|-----|-----|-----|-----|-----|-----|-----|-----|-----|-----|-----|-----|-----|-----|-----|-----|
| 8 | 8 | 8 | 7 | 7 | 7 | 6 | 6 | 6 | 6 | 5 | 5 | 5 | 5 | 4 | 4 |

| 160 | 161 | 162 | 163 | 164 | 165 | 166 | 167 | 168 | 169 | 170 | 171 | 172 | 173 | 174 | 175 |
|-----|-----|-----|-----|-----|-----|-----|-----|-----|-----|-----|-----|-----|-----|-----|-----|
| 4 | 4 | 4 | 3 | 3 | 3 | 3 | 3 | 2 | 2 | 2 | 2 | 2 | 2 | 1 | 1 |

| 176 | 177 | 178 | 179 | 180 | 181 | 182 | 183 | 184 | 185 | 186 | 187 | 188 | 189 | 190 | 191 |
|-----|-----|-----|-----|-----|-----|-----|-----|-----|-----|-----|-----|-----|-----|-----|-----|
| 1 | 1 | 1 | 1 | 1 | 1 | 0 | 0 | 0 | 0 | 0 | 0 | 0 | 0 | 0 | 0 |

**Fig.37**

Fig.40